# EUROPEAN PATENT APPLICATION

(11) **EP 4 301 064 A1**
(43) Date of publication of application: **03.01.2024**
(21) Application number: 21928143.3
(22) Date of filing: 28.12.2021
(51) Int. Cl.: H04W 72/04, H04W 72/12, H04W 74/04, H04W 84/12

(54) **COMMUNICATION DEVICE AND COMMUNICATION METHOD**

(30) Priority: 26.02.2021 JP 2021030010
(71) Applicant: Sony Group Corporation, Tokyo 108-0075 (JP)
(72) Inventor: TANAKA, Ken, Tokyo 108-0075 (JP); HIRATA, Ryuichi, Tokyo 108-0075 (JP); SUGAYA, Shigeru, Tokyo 108-0075 (JP); AIO, Kosuke, Tokyo 108-0075 (JP)
(74) Representative: D Young & Co LLP
(86) International application number: PCT/JP2021/048889
(87) International publication number: WO 2022/181050

(57) **Abstract**

A communication device that increases transmission efficiency by using a plurality of links is to be provided.

A communication device that performs wireless communication using a plurality of links sends, during a period of transmission using a first link, a notification of information regarding a change in the transmission period in the first link, the change being caused by further transmission using a second link. The communication device sends, in the first link, a notification of information indicating whether or not acquisition of a transmission right is being attempted in the second link, and sends, in the second link, a notification of information indicating whether or not at least information regarding a transmission period written in a frame to be transmitted in the first link has been changed, and the information regarding the change in the transmission period in the first link.

## Description

### TECHNICAL FIELD

The technology disclosed in the present specification (the technology will be hereinafter referred to as "the present disclosure") relates to a communication device that performs wireless communication, and a communication method.

### BACKGROUND ART

In a wireless local area network (LAN), an access point (AP or BS) and a user terminal (STA or user equipment (UE)) autonomously obtain transmission rights in a basic service set (BSS) and perform communication in an unlicensed band in the BSS.

The amount of data that is handled in high-definition video transmission such as augmented reality (AR), virtual reality (VR), and 4K/8K is very large these days, and higher transmission capacities are required in wireless transmission. Therefore, there is a demand for an expansion of the transmission frequency bandwidth.

However, the frequency bands as unlicensed bands are limited, and it is difficult to secure a wide frequency bandwidth. In view of this, in IEEE 802.11 Task Group (TG) be, a transmission method using a substantially wider frequency bandwidth by simultaneously using a plurality of frequency bands such as a 5 GHz band and a 6 GHz band has been studied.

### CITATION LIST

### NON-PATENT DOCUMENTS

Non-Patent Document 1: Yongho Seok, et al., "Proposed Draft Text for MLO Multi-Link Channel Access: PPDU End Time Alignment", IEEE802.11-20/1271r8, Sep. 9, 2020
Non-Patent Document 2: Zhou Lan, et al., "MLO a-synchronize and synchronize operation discussions", IEEE 802.11-20/291r1 Jan. 20, 2020

### SUMMARY OF THE INVENTION

### PROBLEMS TO BE SOLVED BY THE INVENTION

An objective of the present disclosure is to provide a communication device that performs wireless communication using a plurality of frequency bands, and a communication method.

### SOLUTIONS TO PROBLEMS

The present disclosure has been made in view of the above problems, and
a first aspect thereof is a communication device that performs wireless communication using a plurality of links, and sends, during a period of transmission using a first link, a notification of information regarding a change in the period of transmission in the first link, the change being caused by further transmission using a second link.

The communication device according to the first aspect notifies the transmission destination of the information, using the second link. Specifically, the communication device according to the first aspect writes, for each transmission unit forming a data frame to be transmitted in the first link, information indicating whether or not acquisition of a transmission right is being attempted in the second link, and describes, for each transmission unit forming a data frame to be transmitted in the second link, information indicating whether or not information regarding at least a transmission period written in a frame to be transmitted in the first link has been changed, and the information regarding the change in the transmission period in the first link.

The communication device according to the first aspect can perform other transmission using at least one of the first link or the second within the original transmission period in the first link.

Alternatively, the communication device according to the first aspect can send a notification of opening of the second link to another terminal within the original transmission period in the first link.

Further, a second aspect of the present disclosure is a communication method for performing wireless communication using a plurality of links,
the communication method including:
a step of starting transmission in a first link;
a step of further starting, during the period of the transmission using the first link, transmission using a second link; and
a step of sending a notification of information regarding a change in the period of the transmission in the first link, the change being caused by the transmission using the second link.

Further, a third aspect of the present disclosure is a communication device that performs wireless communication using a plurality of links, in which,
when further receiving data in a second link while receiving data in a first link, the communication device receives information regarding a change in a transmission period in the first link, the change being caused by transmission using the second link.

The communication device according to the second aspect controls a communication operation in the first link, on the basis of the information received in the second link.

Specifically, the communication device according to the second aspect performs a reception process in the second link, when receiving, in the first link, information indicating that the other side of communication is attempting to acquire a transmission right in the second link. The communication device then receives, in the second link, information indicating whether or not information regarding at least a transmission period written in a frame to be transmitted in the first link has been changed, and information regarding a change in the transmission period in the first link, and controls a communication operation in the first link.

The communication device according to the second aspect includes MAC layer processing units that perform processing in MAC layers in the respective links, and a common data processing unit that performs data processing common to all links. The MAC layer processing unit in the second link then notifies the MAC layer processing unit in the first link of the information received in the second link through the common data processing unit.

Further, a fourth aspect of the present disclosure is a communication method for performing wireless communication using a plurality of links,
the communication method including:
a step of receiving data in a first link;
a step of performing a reception process in a second link, when receiving, in the first link, information indicating that the other side of communication is attempting to acquire a transmission right in the second link;
a step of receiving, after receiving data in the second link, information regarding a change in a transmission period in the first link, the change being caused by transmission using the second link; and
a step of controlling a communication operation in the first link, on the basis of the information received in the second link.

### EFFECTS OF THE INVENTION

According to the present disclosure, it is possible to provide a communication device and a communication method that increase transmission efficiency, using a plurality of links.

Note that the effects described in the present specification are merely examples, and the effects to be brought by the present disclosure are not limited thereto. Further, in addition to the above effects, the present disclosure might further exhibit additional effects in some cases.

Other objects, features, and advantages of the present disclosure will become apparent from a more detailed description based on embodiments described below and the accompanying drawings.

### BRIEF DESCRIPTION OF DRAWINGS

Fig. 1 is a diagram showing an example operation in which data is transmitted from a STR AP MLD to a non-STR non-AP MLD.
Fig. 2 is a diagram showing an example operation in which a STR MLD receives data from another MLD, using a plurality of links.
Fig. 3 is a diagram showing an example configuration of a wireless network system to which the present disclosure is applied.
Fig. 4 is a diagram showing an example configuration of a communication device 400.
Fig. 5 is a diagram showing an example communication sequence (a first embodiment) implemented in a wireless network system.
Fig. 6 is a diagram showing an example transmitting operation in DL Transmission.
Fig. 7 is a diagram showing an example configuration of a frame to be transmitted with Capabilities Exchange.
Fig. 8 is a diagram showing specific examples of operations of DL Transmission and UL Transmission.
Fig. 9 is a diagram showing an example configuration of a PPDU.
Fig. 10 is a diagram showing examples of operations in a communication unit 410 in a non-STR non-AP MLD 1.
Fig. 11 is a flowchart showing an operation to be performed by a Common Entity in the non-STR non-AP MLD.
Fig. 12 is a diagram showing an example communication sequence (a second embodiment) implemented in a wireless network system.
Fig. 13 is a diagram showing specific examples of operations of DL Transmission and UL Transmission.
Fig. 14 is a diagram showing an example configuration of a frame to be transmitted with Enhanced CF-End.
Fig. 15 is a diagram showing examples of operations in a communication unit 410 in a non-STR non-AP MLD 1.
Fig. 16 is a diagram showing an example communication sequence (a third embodiment) implemented in a wireless network system.
Fig. 17 is a diagram showing an example configuration of a frame to be transmitted with Capabilities Exchange.
Fig. 18 is a diagram showing an example configuration of a frame to be transmitted with Capabilities Exchange.
Fig. 19 is a diagram showing specific examples of operations of DL Transmission and UL Transmission.
Fig. 20 is a diagram showing an example configuration of a PPDU.
Fig. 21 is a diagram showing examples of operations in a communication unit 410 in a STR non-AP MLD 1.

### MODES FOR CARRYING OUT THE INVENTION

In the description below, the present disclosure will be explained in the following order, with reference to the drawings.

A. Multi-link Transmission at Present
B. Overview of the Present Disclosure
C. Example System Configuration
D. Example Device Configuration
E. First Embodiment
F. Second Embodiment
G. Third Embodiment
H. Summary

### A. Today's Multi-Link Transmission

### A-1. Introduction of Multiple Links

To secure a wider frequency band in a limited frequency band, a method for performing transmission using a plurality of frequency bands at the same time has been studied (as mentioned above). Here, frequency bands are also referred to as "links". Further, a terminal that can perform transmission using a plurality of frequency bands or a plurality of links at the same time is also referred to as a multi-link device (MLD). An AP that is a MLD is referred to as an "AP MLD (Access Point Multi-Link Device)", and a STA that is a MLD is referred to as a "non-AP MLD".

"Performing transmission using a plurality of links at the same time" does not mean performing transmission while controlling the plurality of links independently, but means separately controlling communication operations between the plurality of links. For example, transmission using a plurality of links at the same time is performed through the operations described below. Here, each link is a wireless transmission channel through which data can be transmitted between two communication devices, and the frequency bands of the respective links may be different.

(1) Transmitting signals synchronized in a plurality of links.
(2) Performing uplink transmission from a STA to an AP in one link, and performing downlink transmission from an AP to a STA in a different link.

### A-2. Introduction of a STR and a NSTR in Multi-Link Transmission

Where a terminal that can perform transmission in a plurality of links coexists with a terminal that can perform transmission only at a single frequency, it is conceivable to acquire a transmission right for each frequency. Therefore, there may be cases where one STA performs uplink transmission to an AP in a 5 GHz band and downlink transmission in a 6 GHz band at the same time, for example, and cases where only uplink transmission or only downlink transmission is performed in both links. That is, a plurality of links is used to perform transmission and reception at the same time in each link (Simultaneous Transmit and Receive (STR)), or either transmission or reception is performed in a plurality of links (non-STR (NSTR)).

In a case where a non-AP MLD performs STR, a transmission signal from the non-AP MLD leaks into a signal the non-AP MLD has received, which causes the problem of greater self-interference and poorer communication quality (see Non-Patent Document 1). This problem is caused by the following factors, for example.

(1) The degree of proximity between links (frequency bands).
(2) The correlation between STA-MLD antennas and the characteristics of band-pass filters attached to the antennas, in a case where a STA-MLD uses different antennas for the respective links.

A non-AP MLD in which the above problem occurs is defined as a "non-STR non-AP MLD" or "NSTR limited (STA is NSTR limited)" as a terminal that does not perform STR. However, depending not only on the profile of the terminal but also on the links being used at the same time, the same terminal might be controlled to operate as a non-STR MLD in a specific link pair and operate as a STR MLD in another link pair. Hereinafter, a non-STR non-AP MLD is defined as a "non-AP MLD that operates as a non-STR for at least the current link pair".

### A-3. Problem in a non-STR Terminal: Necessity of Control on Data Reception End Time at the Time of Reception

In a case where a non-STR non-AP MLD receives signals from a certain terminal through a plurality of links at the same time, the reception end times of the received signals in the respective links need to be the same. This is based on the fact that, in a wireless LAN, it is a normal operation for a terminal to transmit an acknowledgment (Ack) of receipt within a specified period of time after the end of reception of a received signal. In other words, if the reception end times of the respective received signals are not the same, the non-STR non-AP MLD transmits an Ack in one link while receiving a signal in another link, and unintended STR (Ack transmission and signal reception being performed at the same time) should be avoided.

Note that the above signal is a data unit having a certain time width, and is called a physical layer convergence protocol (PLCP) protocol data unit (PPDU) (see Non-Patent Document 2). Further, Non-Patent Document 1 teaches that the above specified period is set to about 16 microseconds, though it is a value depending on the mounting of the device, and that, in a case where signals are transmitted to the same non-STR non-AP MLD as the destination in a plurality of links, the transmission end times of the transmission signals in the respective links have a difference of eight microseconds or shorter.

### A-4. Overview of the Proposal and Scheme Being Considered in Today's Multi-Link Transmission: Synchronized Transmission and Asynchronized Transmission

As for transmission to a non-AP MLD in a plurality of links, Non-Patent Document 2 defines the two types described below. In transmission to a non-STR non-AP MLD in particular, the reception end times (or the transmission termination times of transmission signals) in the respective links need to be aligned.

(1) Synchronized transmission (Sync. Tx)
   - Transmission with the transmission start times of the transmission target data being aligned between different links.
(2) Asynchronized transmission (Async. Tx)
   - Transmission with the transmission start times of the transmission target data not being aligned between different links.

### A-5. Problems of Synchronized Transmission and Advantages of Asynchronized Transmission

The condition for performing synchronized transmission is now described, mainly on the basis of the description in Non-Patent Document 1.

In a wireless LAN, each terminal cannot obtain a transmission right unless a random waiting time (back-off time) comes to an end. The condition for synchronized transmission described in Non-Patent Document 1 is that synchronized transmission is to be performed only in a case where the transmission right has been successfully acquired in each link after the respective back-off time expired in a plurality of links. The reason why this condition is necessary is that fairness should be maintained between the respective links, because the back-off time is determined by the degree of congestion of transmission in each link.

However, in a case where there is a deviation in the degree of congestion of transmission in the respective links, the back-off time to be adopted in both links varies. For this reason, in a case where the back-off times in all the links come to an end, synchronized transmission is inevitably performed in accordance with an environment where transmission is most congested. Therefore, during the period of waiting for an end of the back-off times in all the links before synchronized transmission, a transmission right in a link is acquired by another terminal, and the probability that synchronized transmission can be performed becomes lower.

In view of this, asynchronized transmission is adopted, so that a transmission right can be acquired from a link whose back-off time has expired, and the probability of multi-link transmission from an AP MLD to a non-STR non-AP MLD can be increased. Thus, the asynchronized transmission contributes to an increase in the throughput in the entire system.

### A-6. Currently Discussed Method for Performing Asynchronized Transmission

Non-Patent Document 2 teaches that asynchronized transmission is performed by the methods (A) to (C) described below. Here, the link in which the transmission right is first acquired is referred to as the "link 1" (or Basic Link), and the link in which the transmission right is acquired after that is referred to as the "link 2" (or Support Link). Further, data to be transmitted is referred to as a PPDU.

(A) In the respective links, PPDUs are transmitted asynchronously after the back-off times have expired.
(B) In the link 1, after a transmission opportunity (TXOP) is acquired through a notification of a request to send (RTS) frame and a clear to send (CTS) frame, a PPDU is transmitted. In the link 2, on the other hand, a PPDU is transmitted, but neither a RTS frame nor a CTS frame is transmitted.
(C) A RTS frame and a CTS frame are transmitted in each link, and, after a TXOP is acquired for each link, PPDUs are transmitted.

In the case of transmission to a non-STR non-AP MLD in particular, the transmission end times of the PPDUs being transmitted in the respective links need to be aligned.

In asynchronized transmission, however, the receiving operation end time t₁ in the link 1 is later than the receiving operation end time t₂ in the link 2 in some cases. In such a case, the transmission time of an Ack frame in the receiving terminal becomes a problem.

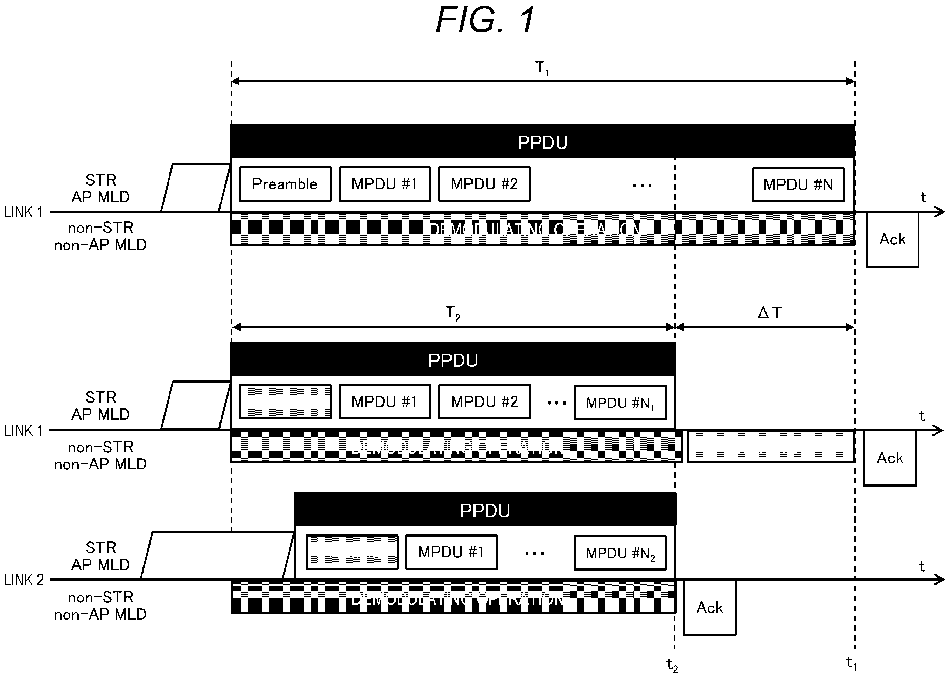

Fig. 1 illustrates example operations in which data (a PPDU) is transmitted from a STR AP MLD to a non-STR non-AP MLD. In the drawing, each abscissa axis is a time axis. Note that the upper row in Fig. 1 shows an example operation of transmission using only a link 1, and the lower rows in Fig. 1 show an example operation of transmission using the link 1 and a link 2. Further, a PPDU includes a preamble and a plurality of media access control protocol data units (MPDUs).

As illustrated in the upper row in Fig. 1, in a case where transmission is performed with only the link 1, the STR AP MLD transmits a PPDU to the non-STR non-AP MLD after the back-off time expires. The non-STR non-AP MLD returns an Ack in the link 1 after performing a demodulating operation on the PPDU. As illustrated in the drawing, the transmission period is represented by T₁, and the transmission end time is represented by t₁.

Meanwhile, as illustrated in the lower rows in Fig. 1, in a case where transmission is performed with the link 1 and the link 2, the STR AP MLD transmits a PPDU to the non-STR non-AP MLD in each link after the back-off time expires in each link. The non-STR non-AP MLD returns an Ack in the link 1 and the link 2 after performing a demodulating operation on the PPDU in both the link 1 and the link 2. As illustrated in the drawing, the transmission period is represented by T₂, and the transmission end time is represented by t₂. A transmission period difference ΔT (T₁ - T₂) is generated between a case where transmission is performed only in the link 1 and a case where transmission is performed in the link 1 and the link 2.

In a wireless LAN, information indicating the length of a PPDU (which is the time length of the data) is included in the preamble, which is the top portion of the PPDU. The determination as to the end of reception of a reception signal in a terminal is conducted by notifying the physical (PHY) layer in the terminal to the media access control (MAC) layer in the terminal of PHY-RXEND.indication, which is information indicating the end of reception. Further, the MAC layer is notified of the PHY-RXEND.indication only after the reception time estimated from the length of the PPDU included in the preamble of the received signal.

When the STR AP MLD can acquire the transmission right in the link 2 while transmitting data in the link 1, the STR AP MLD can shorten the data transmission period from T₁ to T₂ by ΔT by transmitting, in the link 2, the data originally to be transmitted only in the link 1, as illustrated in the lower rows in Fig. 1. However, due to the restriction on the notification timing of the above PHY-RXEND.indication, the operation regarded as the receiving operation during the transmission period before the shortening, or until time t₁, in the MAC layer in the link 1. This is essentially because information for sending a notification that the transmission period has been shortened, and the interface for the notification of the information are not defined in the MAC layer in each of the link 1 and the link 2.

Therefore, in asynchronized transmission, the receiving operation end time in the link 1 is later than the receiving operation end time in the link 2. As a result, in the non-STR non-AP MLD, an Ack can be transmitted only after time t₁, instead of time t₂, in the link 1, and data cannot be transmitted in the shortened transmission period (ΔT in Fig. 1). Therefore, the non-STR non-AP MLD has to wait. That is, in the asynchronized transmission, although the transmission period has been successfully shortened by a certain amount of time, the Ack transmission time is delayed, and the problem of degradation of the transmission efficiency of the system becomes apparent.

Furthermore, although not illustrated in Fig. 1, in a case where another terminal that is not the non-STR non-AP MLD shown in Fig. 1 is present in the link 1 even though the non-STR non-AP MLD can transmit the Ack at time t₂, the terminal refrains from performing transmission until time t₁ when the transmission period T₁ of which the terminal has been notified through the original PPDU comes to an end. Therefore, the non-STR non-AP MLD cannot perform transmission during the period from the time when the non-STR non-AP MLD completes the Ack transmission till time t₁, and the problem of degradation of the transmission efficiency of the system becomes apparent.

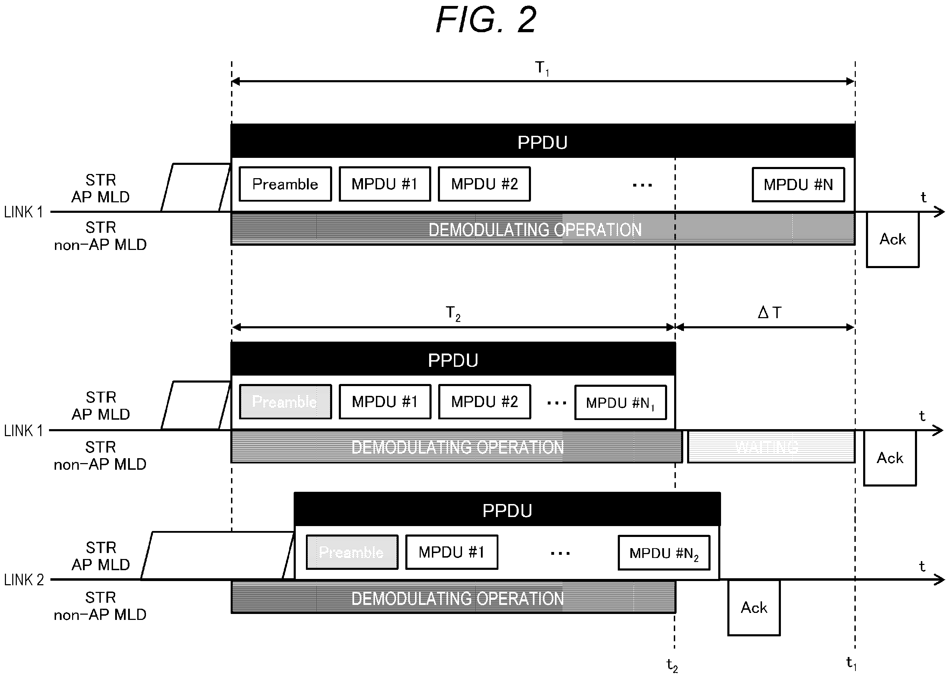

When the STR MLD receives data from another MLD through a plurality of links, a problem similar to the above also occurs. Fig. 2 illustrates example operations in which data (PPDU) is transmitted from a STR AP MLD to a STR non-AP MLD. In the drawing, each abscissa axis is a time axis. Note that the upper row in Fig. 2 shows an example operation of transmission using only the link 1, and the lower rows in Fig. 2 show an example operation of transmission using the link 1 and the link 2. In a case where transmission is performed in the link 1 and the link 2, which is unlike the case where the non-STR MLD shown in the lower rows in Fig. 1 performs reception, the reception end times of the respective links are not necessarily the same. This is because the constraint of the non-STR MLD is eliminated.

As shown in the lower rows in Fig. 2, in a case where the STR AP MLD has an opportunity to perform transmission in the link 2 during transmission in the link 1, the transmission period in the link 1 is shortened by ΔT (T₁ - T₂), compared with that in a case that transmission is performed only through the link 1 as illustrated in the upper row in Fig. 2. However, unless the MAC layer in the link 2 notifies the MAC layer in the link 1 of information indicating the amount ΔT of reduction of the transmission period in the link 1, the STR non-AP MLD continues to perform the receiving operation in the link 1 for the transmission period T₁ before the period shortening, in accordance with information indicating the length of the PPDU included in the PPDU received in the link 1.

Accordingly, in the STR non-AP MLD, an Ack can also be transmitted only after time t₁, instead of time t₂, in the link 1, and data cannot be transmitted in the shortened transmission period (ΔT in Fig. 2). Therefore, the STR non-AP MLD has to wait. That is, although the transmission period has been successfully shortened, the Ack transmission time is delayed, and the problem of degradation of the transmission efficiency of the system also becomes apparent.

### B. Overview of the Present Disclosure

To solve the problem described in the above section A, the present disclosure suggests the following operations (1) to (3) to be performed in a case where the STR AP MLD further performs transmission through the link 2 during transmission to a non-AP MLD through the link 1.

(1) The STR AP MLD notifies the non-AP MLD of the shortened transmission period (the period ΔT in Figs. 1 and 2) in the link 1, using the link 2. (The non-AP MLD herein may be a non-STR non-AP MLD or a STR non-AP MLD.)
(2) In a case where the non-AP MLD receives asynchronously transmitted signals in a plurality of links, the MAC layer in the link 2 notifies the MAC layer in the link 1 of the shortened transmission period ΔT in the link 1 in the non-AP MLD.
(3) During the shortened transmission period ΔT, transmission from the non-AP MLD to the STR AP MLD is performed at least in the link 1.

### C. Example System Configuration

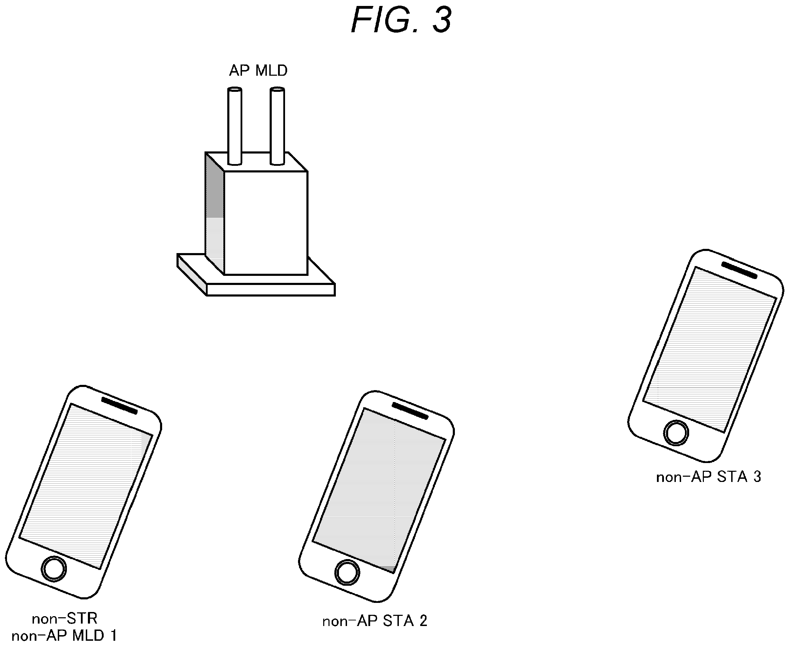

Fig. 3 illustrates an example configuration of a wireless network system to which the present disclosure is applied. In the illustrated wireless network system, a non-AP STA 2 and a non-AP STA 3 that are terminals but are not access points, in addition to one non-STR non-AP MLD 1, are connected to one access point (an AP MLD). However, each non-AP STA may be any one of a non-STR non-AP MLD, a STR non-AP MLD, and a non-AP STA that is not a MLD.

In the example illustrated in Fig. 3, two non-AP STAs (which are the non-AP STA 2 and the non-AP STA 3) are connected to the AP MLD, but the number of non-AP STAs is not limited to any particular number. There may be no other non-AP STAs than the non-STR non-AP MLD 1, or there may be one non-AP STA or at least three non-AP STAs other than the non-STR non-AP MLD 1. Further, instead of a non-STR non-AP MLD, a STR non-AP MLD may be connected to the AP MLD.

In the description below, the set of non-AP STAs other than the non-STR non-AP MLD 1 is defined as the non-AP STAs, and the non-AP STAs indicate one or more non-AP STAs unless otherwise specified. Further, the AP MLD is a STR AP MLD, unless otherwise specified.

The links in the wireless network system illustrated in Fig. 3 is now described. There exists a plurality of links in which the non-STR non-AP MLD 1 can perform transmission to the AP MLD, and each non-AP STA of the non-AP STAs can perform transmission to the AP MLD in one or more links. Note that the links in which the respective non-AP STAs can perform transmission are not necessarily the same. The link in which the AP MLD has first acquired the transmission right for transmission to the non-STR non AP MLD is referred to as the "link 1" (or Basic Link), and the link in which the AP MLD has acquired the transmission right after that is referred to as the "link 2" (or Support Link).

### D. Example Device Configuration

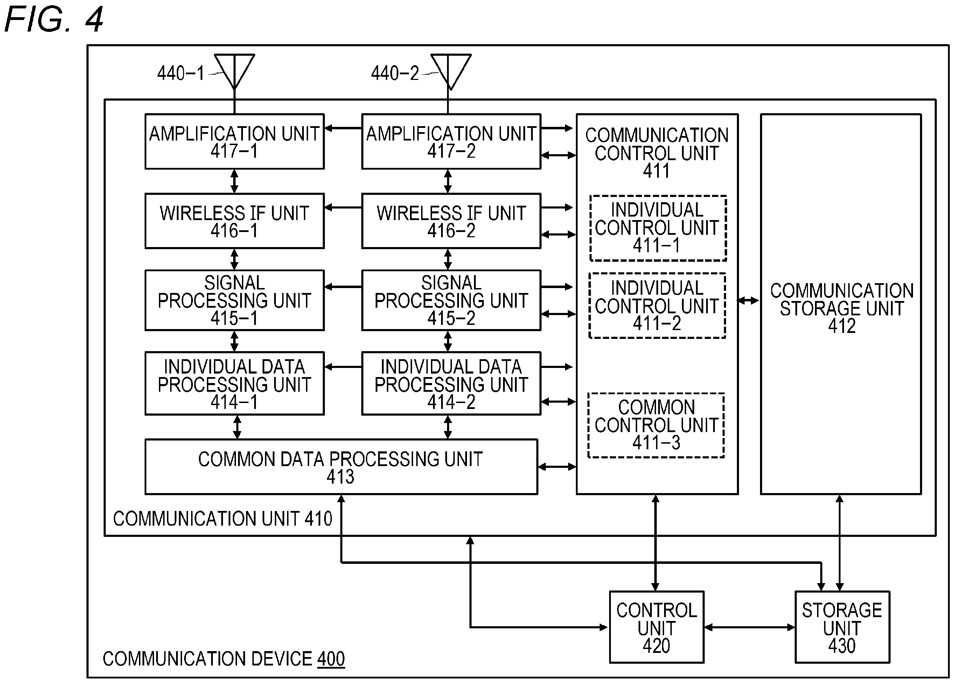

Fig. 4 illustrates an example configuration of a communication device 400 that operates as a MLD (an AP MLD or a non-AP MLD) capable of multi-link transmission using the link 1 and the link 2 in the wireless network system illustrated in Fig. 3. The communication device 400 shown in the drawing includes a communication unit 410, a control unit 420, a storage unit 430, and antennas 440. The communication unit 410 includes a communication control unit 411, a communication storage unit 412, a common data processing unit 413, individual data processing units 414, signal processing units 415, wireless interface units 416, and amplification units 417.

The respective components including the individual data processing units 414, the signal processing units 415, the wireless interface units 416, the amplification units 417, and the antennas 440 in the communication unit 410 are provided for the respective links, and "-1" is added to the end of the name of each unit for the link 1, and "-2" is added to the end of the name of each unit for the link 2. However, in the description below, "-1" and "-2" are omitted in cases where common explanation is made. In the description below, the respective components are explained.

The amplification unit 417 amplifies a signal input from the wireless interface 416 unit or the antenna 440. Part of the amplification unit 417 may be a component located outside the communication unit 410. Alternatively, part of the amplification unit 417 may be included in the wireless interface unit 414.

At a time of transmission, the wireless interface unit 416 performs digital-analog signal conversion, filtering, up-conversion, and phase control on the symbol stream, and generates a transmission signal. Also, at a time of reception, the wireless interface unit 416 performs down-conversion, filtering, and analog-digital signal conversion on the received signal, and generates a symbol stream.

At the time of transmission, the signal processing unit 415 performs encoding, interleaving, modulation, and the like on the data unit, and adds a physical header thereto, to generate a symbol stream. Also, at the time of reception, the signal processing unit 415 analyzes the physical header, performs demodulation, deinterleaving, decoding, and the like on the symbol stream, and generates a data unit. Furthermore, the signal processing unit 415 performs complex channel characteristic estimation and a spatial separation process as necessary.

The communication device 400 includes the common data processing unit 413 as a data processing unit, and the individual data processing units 414 for the respective links.

At the time of transmission, the common data processing unit 413 performs sequence management on the data held in the communication storage unit 412 and control information and management information received from the communication control unit 411, performs an encryption process or the like to generate a data unit, and allocates the data unit to the individual data processing units 414. Further, at the time of reception, the common data processing unit 413 performs a decryption process and a reordering process on the data unit.

At the time of transmission, the individual data processing unit 414 performs a channel access operation based on carrier sensing, addition of a MAC header and addition of an error detection code to the data to be transmitted, and a process of linking a plurality of data units. Further, at the time of reception, the individual data processing unit 414 performs a process of decoupling the MAC header of the received data unit, analysis and error detection, and a retransmission requesting operation.

Note that operations of the common data processing unit 413 and each individual data processing unit 414 are not limited to the above, and for example, one may perform the other operation.

The individual data processing unit 414, the signal processing unit 415, the wireless interface unit 416, the amplification unit 417, and the antenna 440 provided for each one link constitute one set (hereinafter also referred to as an "individual communication set"), two or more individual communication sets are included as components of the communication device 400, and wireless communication is performed in each link for each individual communication set. Further, each individual communication set may include a storage unit (not shown in the drawing). Note that a link is a wireless transmission channel through which data transmission can be performed between two communication devices, and the links that are used by the respective individual communication sets may be of different frequency bands. Further, an individual data processing unit 414 and a signal processing unit 415 may be designed as one set, and two or more sets may be connected to one wireless interface unit 416.

The communication control unit 411 controls operations of the respective components and information transmission between the components. Also, control is performed to transfer, to each data processing unit, the control information and the management information to be transmitted to another communication device.

As shown in Fig. 4, the communication control unit 411 includes individual control units 411-1 and 411-2 that control the respective individual communication sets, and a common control unit 411-3 that performs control common to the common data processing unit 413 and the individual communication sets. In the present disclosure, each of the individual control units 411-1 and 411-2 has a function of transmitting, to the other individual control unit, information (PHY-RXEND.indication) indicating the period during which the data unit in its own individual communication set is received or the end of reception of the data unit from the control information (Length or Duration information) included in the received data unit. The individual control units 411-1 and 411-2 may each perform the above transmission via the common control unit 411-3. In the present disclosure, the signal reception period can be controlled between individual communication sets or individual control units during reception of signals from a plurality of links.

The communication storage unit 412 holds information to be used by the communication control unit 411. The communication storage unit 412 also holds data to be transmitted in the respective links, and data received from the respective links.

The control unit 420 controls the communication unit 410 and the communication control unit 411. The control unit 420 may also perform part of the operation of the communication control unit 411. Further, the communication control unit 411 and the control unit 420 may be designed as one physical block.

The storage unit 430 holds information to be used by the control unit 420 and the communication unit 410. The storage unit 430 may also perform part of the operation of the communication storage unit 412. Further, the storage unit 430 and the communication storage unit 412 may be designed as one physical block.

Note that a wireless interface unit 416, an amplification unit 417, and an antenna 440 may be designed as one set, and two or more sets may be included in the components of the communication device. Meanwhile, the communication unit 410 can be formed with one or more large scale integrations (LSIs). Further, the common data processing unit 413 is also referred to as Upper MAC or Higher MAC, and the individual data processing units 414 are also referred to as Lower MACs.

Furthermore, a set of an individual data processing unit 414 and a signal processing unit 415 is also referred to as an AP entity or a non-AP entity. Further, the communication control unit 411 is also referred to as a MLD management entity.

### E. First Embodiment

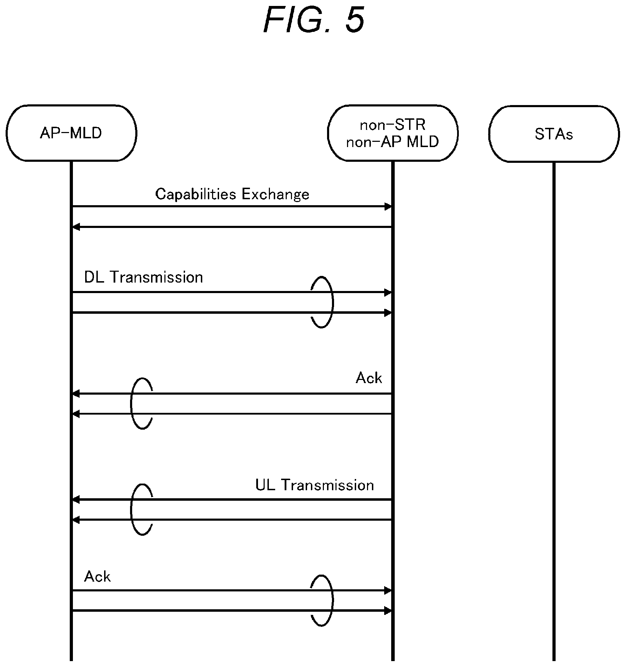

Fig. 5 illustrates an example communication sequence implemented in a wireless network system as a first embodiment. Note that the vertical axis is the time axis. Here, the wireless network system is a wireless network system in which one AP MLD, one non-STR non AP MLD, and one or a plurality of STAs (hereinafter referred to as the "STAs") are present, as in Fig. 3.

In the example communication sequence shown in Fig. 5, the following four kinds of transmission are illustrated. The frame and the like to be transmitted in each transmitting operation will be described later in detail.

(1) Capabilities Exchange: Exchange of information indicating the capability of each terminal
(2) Downlink (DL) Transmission: Data transmission from the AP MLD to the non-STR non-AP MLD
(3) Uplink (UL) Transmission: Data transmission from the non-STR non-AP MLD to the AP MLD
(4) Ack: Acknowledgment of receipt in response to each data transmission in the above (2) and (3)

### E-1. Points to Be Noted

Before each transmitting operation shown in Fig. 5 is described, some points to be noted are explained.

### E-1-1. Notes on Transmission Rights

Fig. 5 shows a sequence in transmission to be performed by the AP MLD and the non-STR non-AP MLD, but does not show transmission with the STAs. This is because Fig. 5 shows an example in which the AP MLD or the non-STR non-AP MLD acquires a transmission right before the STAs, and performs each transmitting operation. Although not shown in the drawing, transmission from the STAs to the AP MLD, or transmission from the AP MLD to the STAs may occur. For example, DL Transmission may be performed after transmission occurs between the AP MLD and some of the STAs immediately after Capabilities Exchange.

In DL Transmission, while transmission is performed in a certain link (hereinafter referred to as the "link 1"), transmission is performed in another link. Also, Ack transmission and UL Transmission in two links from the non-STR non-AP MLD may be performed within the transmission right (within a period in which transmission is allowed) secured by transmission in the link 1 of the AP MLD.

### E-1-2. Notes on DL Transmission

As described above, in DL Transmission, transmission in another link (link 2) occurs during transmission in a certain link (link 1).

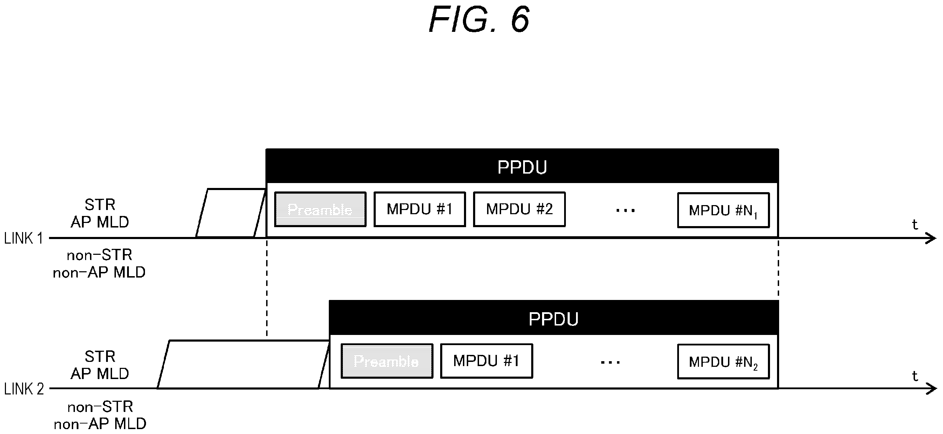

Fig. 6 shows an example operation in which transmission is performed in the link 1 and the link 2 in DL Transmission. Note that the horizontal axis is the time axis. This drawing illustrates an example in which, when DL transmission is performed between the STR AP MLD and the non-STR non-AP MLD using the two links of the link 1 and the link 2, transmission occurs in the link 2 after the start of the transmission in the link 1.

The AP MLD transmits a data unit (PPDU) in the link 1. In the PPDU, control information such as the PPDU length is included in the preamble, which is the top portion of the PPDU. The preamble is followed by MPDUs that are the data.

Note that, due to the constraint of the non-STR non-AP MLD serving as the receiving terminal, the transmission end time or the reception end time of each PPDU is the same (the non-AP MLD must transmit an Ack within a predetermined period in the link in which reception has ended. If the reception end time varies, the Ack needs to be transmitted in another link in which reception has not ended, while a receiving operation is being performed in one link, which conflicts with the constraint of a non-STR). However, this end time is only required to fall within a certain duration, and an error is allowed to occur within the range of 16 microseconds, for example.

### E-1-3. Notes on Each Transmission Order

Fig. 5 illustrates a case where Capabilities Exchange is performed on the non-STR non-AP MLD from the AP MLD, but Capabilities Exchange may be simultaneously transmitted to the non-STR non-AP MLD and the STAs. In a specific example, this may be performed with beacon signals the AP MLD periodically transmits to a plurality of terminals in the surroundings.

Although not shown in Fig. 5, Capabilities Exchange may also occur from the STAs to the AP MLD. As a specific example, after the AP MLD emits a beacon signal, Capabilities Exchange may be transmitted from the STAs to the AP MLD. Note that the order of Capabilities Exchange to be performed from the non-STR non-AP MLD and the STAs is not limited to any particular order.

Each sequence may be partially omitted as necessary, and the order may not be as illustrated in the Fig. 5. For example, if it is determined that an Ack is unnecessary in accordance with the type of the data to be transmitted, the Ack may not be transmitted.

### E-2. Capabilities Exchange (Capability Notification)

The AP MLD and the non-STR non-AP MLD mutually perform information notification (hereinafter referred to as Capabilities Exchange) regarding the capability of their own terminals. The capabilities mentioned herein indicate whether or not the terminal can perform STR transmission and the number of links in which transmission can be performed simultaneously, but are not limited to these aspects.

Capability Exchange may be performed by being included in beacon signals that are periodically transmitted by the respective terminals, for example, or in information notification (Association) for establishing connection between terminals after the beacon signals.

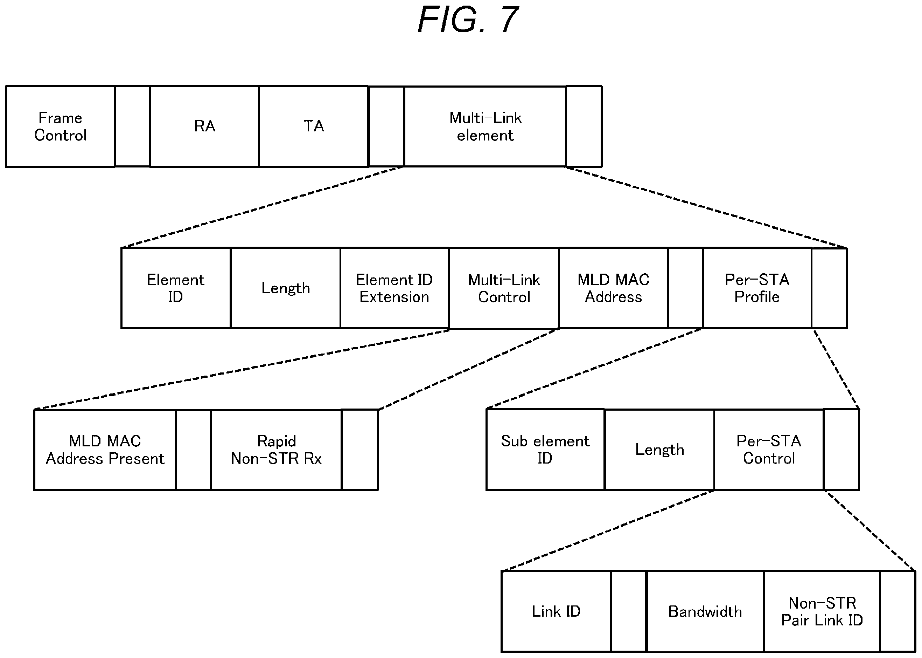

Fig. 7 shows an example configuration of a frame to be transmitted with Capabilities Exchange. The frame shown in the drawing includes the respective fields of Frame Control, a Receiving STA address (RA), a Transmitting STA address (TA), and a Multi-Link element. However, the components of the frame are not limited only to these.

The Frame Control field stores information indicating that the frame is a frame to be transmitted with Capabilities Exchange. Information indicating a source terminal and a destination terminal is stored in the respective fields of the RA and the TA. The Multi-Link element field stores information indicating availability of STR transmission, available links, and the number of links that can be used at the same time for the terminal that transmits the frame.

For example, a terminal-specific MAC address may be indicated in the RA and the TA. Further, in a case where the source terminal and the destination terminal are a MLD in particular, a plurality of MAC addresses may be allocated to one MLD. A specific example of such a case is a case where a MAC address is allocated to each individual communication set in one MLD, or each link to be used by one MLD. That is, the RA and the TA do not indicate only a MLD, but are information for identifying individual communication sets or links of the MLD, in addition to the MLD that transmits the frame. Note that the individual communication sets or the links may be identified together with MLD MAC Address in the Multi-Link element as described later.

The Multi-Link element stores the respective fields of Element ID, Length, Element ID Extension, Multi-Link Control, MLD MAC Address, and Per-STA Profile.

The Element ID field stores information indicating that the element is a Multi-Link element. The Length field stores information indicating the bit length of the Multi-Link element. The Multi-Link Control field stores information indicating the presence/absence of a subsequent MLD MAC Address. The MLD MAC Address field stores identification information individually allocated to the MLD terminal, regardless of the links or the individual communication sets. The Per-STA Profile field stores information regarding each link or each individual communication set.

The Multi-Link Control field stores the respective subfields of MLD MAC Address Present and Rapid Non-STR Rx. The MLD MAC Address Present field stores information indicating that a MLD MAC Address is present. The Rapid Non-STR Rx field stores information indicating that asynchronized transmission (which is asynchronized transmission in which transmission start times are not aligned among a plurality of links) as illustrated in Fig. 6 can be received in a case where the terminal that transmits the frame operates as a non-STR MLD in DL Transmission.

The Per-STA Profile field stores the respective subfields of Sub element ID, Length, and Per-STA Control. Note that there may be a plurality of Per-STA Profiles, and information regarding different links or individual communication sets is shown.

The Sub element ID field stores information indicating that the subfield is Per-STA Profile. The Length field stores information indicating the bit length of Per-STA Profile. The Per-STA Control field stores information regarding the target link or individual communication set shown in the Per-STA Profile field.

Specifically, the Per-STA Control field may store the respective subfields of Link ID, Bandwidth, and Non-STR Pair Link ID. The Link ID field stores information indicating the target link or individual communication set. The Bandwidth field stores information indicating the frequency band in which the link or the individual communication set indicated by Link ID can be transmitted. The Non-STR Pair Link ID field stores information indicating a link or an individual communication set that operates as the non-STR MLD when used simultaneously in the link or the individual communication set indicated by Link ID.

For example, in a case where information indicating "link 1" is stored in the Link ID field, and information indicating "link 2" is stored in the Non-STR Pair Link ID field, when reception (or transmission) is performed in the link 1 and the link 2 at the same time, it can be understood that the terminal that transmits the frame needs to perform transmission that satisfies the operation restriction as a non-STR MLD.

### E-3. After DL Transmission

In DL Transmission, data transmission from the AP MLD to the non-STR non-AP MLD is performed. Meanwhile, in UL Transmission, data transmission from the non-STR non-AP MLD to the AP MLD is performed. As described above, the AP MLD acquires the transmission right in one link (link 1) to perform data transmission herein, but data transmission is started in another link (link 2) during the transmission. However, the transmission end times in the respective links are aligned within a specific error range.

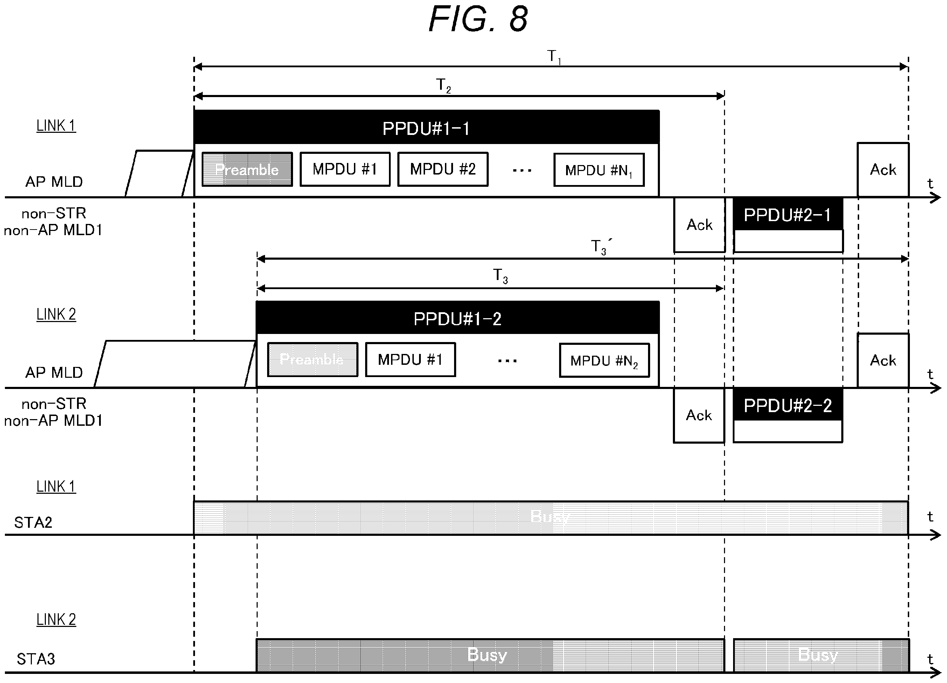

Fig. 8 shows specific examples of operations of DL Transmission and UL Transmission in detail. Note that the horizontal axis is the time axis. In Fig. 8, the AP MLD performs transmission to the non-STR non-AP MLD 1 in the link 1, and immediately after that, performs transmission also in the link 2. Through the prior Capabilities Exchange, the AP MLD recognizes that the non-STR non-AP MLD 1 is compatible with multi-link transmission using the link 1 and the link 2, and asynchronized transmission can be received.

For the PPDU previously transmitted in the link 1, the AP MLD determines, at the time of the transmission start, that a transmission period T₁ is required to transmit the PPDU. After that, the AP MLD newly acquires the transmission right in the link 2, so that part of data originally to be transmitted in the link 1 can be transmitted in the link 2. Accordingly, the transmission period of the PPDU in the link 1 is shortened from T₁ to T₂. At this point of time, since the receiving terminal is a NSTR, the PPDU transmission end times in the link 1 and the link 2 are aligned within a specific error range.

In the above case, the preamble in the PPDU transmitted in the link 1 by the AP MLD includes information indicating the length of a PPDU to be transmitted in the link 1. However, since the preamble is placed at the top of the PPDU, even if the PPDU length is changed after the preamble is transmitted, the receiving terminal cannot recognize the changed PPDU length.

Here, aside from the non-STR non-AP MLD 1, a STA 2 that is a terminal not using the link 2, and a STA 3 that is a terminal not using the link 1 are present.

In a case where the AP MLD can acquire the transmission right and perform notification in the link 2, the AP MLD can notify the non-STR non-AP MLD 1 that the transmission period in the link 1 has been shortened, by incorporating information indicating that the length of the PPDU transmitted in the link 1 has been changed from T₁ to T₂ into the PPDU to be transmitted in the link 2. Further, receiving a similar notification, a STA 3 using the link 2 can determine an idle state of the link 1 after the transmission period T₂. On the other hand, since the STA 2 does not use the link 2, the STA 2 is not notified of the information indicating that the transmission period in the link 1 has been shortened from T₁ to T₂. Therefore, the STA 2 can determine an idle state of the link 1 only after T₁.

Therefore, the AP MLD and the non-STR non-AP MLD 1 perform other PPDU transmission again within the transmission period T₁ of which the AP MLD and the non-STR non-AP MLD 1 have been notified beforehand through the preamble in the link 1. Fig. 8 shows an example in which, among the PPDUs to be newly transmitted, the one to be transmitted in the link 1 is referred to as a PPDU #2-1, and the one to be transmitted in the link 2 is referred to as a PPDU #2-2. Both PPDUs are not transmitted from the AP MLD, but uplink transmission of the PPDUs is performed from the non-STR non-AP MLD to the AP MLD. That is, the non-STR non-AP MLD 1 performs transmission to the AP MLD within the period T₁ in which the transmission right acquired by the AP MLD is valid. The AP MLD can perform other PPDU transmission again within the period T₁ by notifying the non-STR non-AP MLD of a permission of uplink transmission on the basis of the RDG/More PPDU written in the PPDU being transmitted in the link 1 and the link 2 (this permission is a reverse direction grant (RDG)).

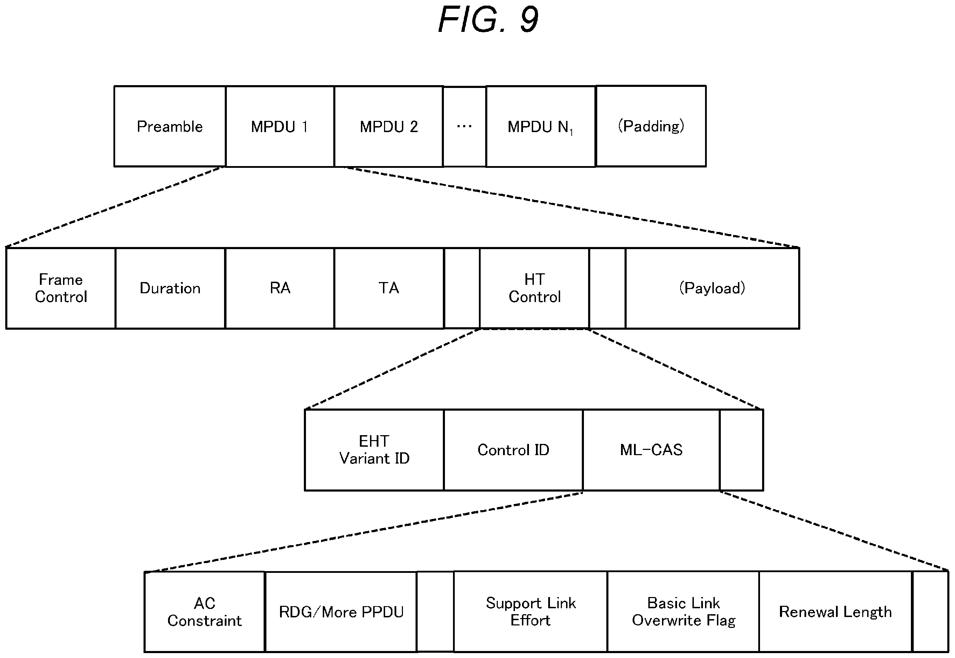

Fig. 9 illustrates an example configuration of a PPDU to be transmitted in the link 1 and the link 2. The PPDU includes a preamble and one or a plurality of MPDUs. Note that an area (padding) for adjusting the data length may be included at the end of the PPDU as necessary.

The preamble includes information necessary for demodulating the subsequent MPDUs, in addition to time synchronization, frequency synchronization, and channel estimation in the terminal that receives the PPDU. As described above, in addition to the information indicating the PPDU length, information called Modulation and Coding Scheme (MCS) indicating the frequency band in which the MPDUs are transmitted, and the modulation scheme and the coding scheme being used may also be included.

Each MPDU includes the data to be transmitted, in addition to the preamble. Each MPDU may store the respective fields of Control, Duration, RA and TA, High Throughput (HT) Control, and Payload. The Frame Control field stores information indicating the type of the frame of the MPDU. The Duration field stores information indicating the transmission period in DL Transmission. The respective fields of the RA and the TA store information indicating a source terminal and a destination terminal, respectively. The HT Control field stores other control information. The Payload field stores the data information to be transmitted, in addition to the above control information.

Note that, in a case where a plurality of MPDUs is stored in the PPDU, Frame Control, Duration, RA, TA, and HT Control are stored in the first MPDU, but these items may not be stored in the subsequent MPDUs.

In particular, the HT Control field stores the respective subfields of EHT variant ID, Control ID, and ML-CAS (Command and Status). Information indicating the type of HT Control is stored in each of EHT variant ID and Control ID. The ML-CAS field stores the type of data to be transmitted in the link, and information regarding the links other than the link in which the frame is transmitted.

The ML-CAS field stores at least one of the subfields of AC Constraint, RDG/More PPDU, Support Link Effort, Basic Link Overwrite Flag, and Renewal Length.

The AC Constraint field stores information indicating that there is a constraint on the type of traffic that can be transmitted in the current DL transmission. The RDG/More PPDU field stores information indicating either (1) or (2) described below.

(1) Information indicating that, in a case where the terminal transmitting the frame is a terminal that has acquired the transmission right, transmission is permitted within the range in which the transmission right reaches the destination terminal (that is, the permission is a reverse direction grant (RDG))
(2) Information indicating whether or not there is a subsequent PPDU, in a case where the permission in (1) has been reported, and a PPDU is transmitted

The Support Link Effort field stores information indicating whether the terminal transmitting the frame is attempting to acquire a transmission right in another link other than the link transmitting the frame.

The Basic Link Overwrite Flag field stores information indicating whether or not to overwrite part of the information included in the preamble or ML-CAS in the receiving terminal, in a case where another link that is not the link transmitting the frame is already used for transmission.

The Renewal Length field is included in the PPDU transmitted in the link 2, and stores information indicating a change in the PPDU length of the link 1 or the changed length of the PPDU in the link 1.

For example, in DL Transmission, the Support Link Effort subfield is stored in a MPDU in the PPDU #1-1 to be transmitted in the link 1 by the AP MLD, and the Basic Link Overwrite Flag subfield and the Renewal Length subfield are stored in the PPDU #1-2 to be transmitted in the link 2 by the AP MLD.

In the example operation illustrated in Fig. 8, the AP MLD can indicate that the AP MLD is attempting to acquire the transmission right in the link 2 (which is the Support Link), with the Support Link Effort field of the PPDU to be transmitted in the link 1 (which is the Basic Link). Further, in a case where the link 2 (which is the Support Link) is already used for transmission, the AP MLD can indicate, with the Basic Link Overwrite Flag subfield, that the information included in ML-CAS (specifically, the change in the PPDU length of the link 1 (which is the Basic Link) or the changed PPDU length of the link 1, which is written in the subsequent Renewal Length field) has been overwritten.

Note that, although ML-CAS is stored in each MPDU in Fig. 9, ML-CAS is not necessarily stored in all the MPDUs. For example, ML-CAS may be stored only in the MPDU at the top, or ML-CAS may be stored not in the MPDUs but in the preamble.

Referring back to Fig. 8, to perform transmission not only in the link 1 but also in the link 2 in the period shortened in the link 1, information indicating T₃' in Fig. 8 is stored into the Duration field in the PPDU #1-2 to be transmitted in the link 2. Also, the RDG/More PPDU subfield of the PPDU to be transmitted in the link 1 and the link 2 includes information indicating that data may be transmitted to the non-STR non-AP MLD, and to the AP MLD within the period T₃' (that is, the information indicates a reverse direction grant (RDG)). As the RDG/More PPDU field of each PPDU the AP MLD transmits in the link 1 and the link 2 indicates a transmission permission in the transmission period T₁, the non-STR non-AP MLD can perform other PPDU transmission (which is uplink transmission) in the link 1 and the link 2 within the transmission period T₁.

### E-4. Control Operation of the Non-STR Non-AP MLD 1

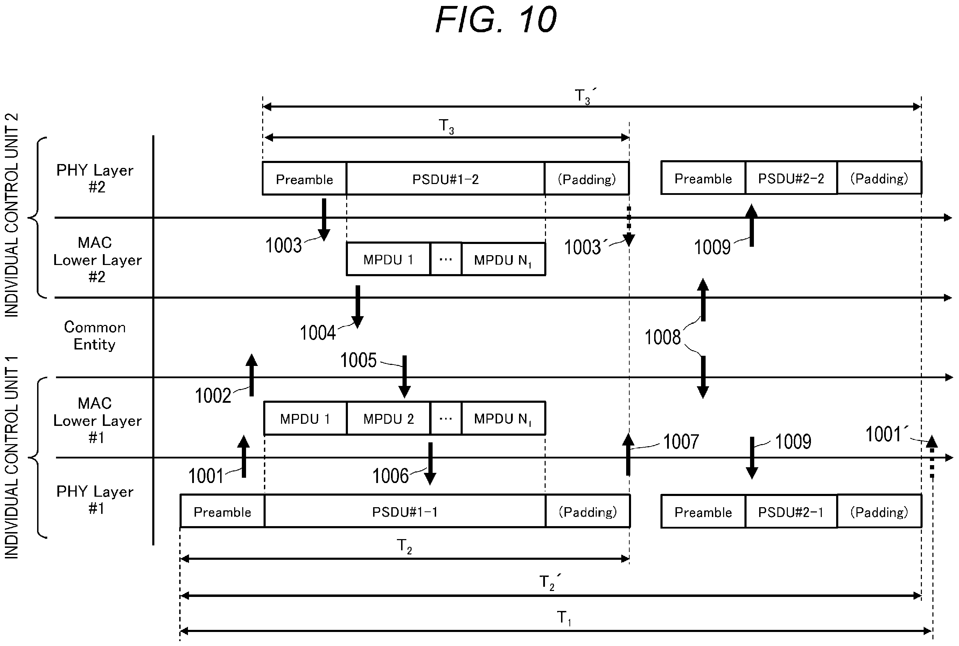

Fig. 10 shows examples of operations of the respective logical entities in the communication unit 410 in the non-STR non-AP MLD 1 that has been notified of the PPDU #1-1 and the PPDU #1-2 in DL Transmission. Note that the horizontal axis is the time axis. Note that, in Fig. 10, a plurality of MPDUs in a PPDU is collectively referred to as a PHY service data unit (PSDU).

An individual control unit 1 for the link 1 and an individual control unit 2 for the link 2 are disposed in the communication unit 410. The individual control unit 1 and the individual control unit 2 each include the respective logical entities of a PHY Layer #1 and a PHY Layer #2 that control the physical layers of the link 1 and the link 2, respectively, and a MAC Lower Sublayer #1 and a MAC Lower Sublayer #2 that control data processing in the link 1 and the link 2, respectively. In the communication unit 410, a Common Entity is further disposed as a logical entity that controls data processing common to the link 1 and the link 2.

Also, information is exchanged between a Layer and a Layer, and between a Layer and an Entity, and this interface is also called a service access point (SAP). In the Common Entity, the parameters to be applied in the respective MAC Lower Sublayers and the respective PHY Layers are calculated, in addition to the parameters to be used in the common data processing unit 413 in the communication unit 410.

The PHY Layers each include an antenna 440, and an amplification unit 417, a wireless interface unit 416, a signal processing unit 415, and an individual control unit 414 in the communication unit 410, and the MAC Lower Sublayers each include an individual data processing unit 414 in the communication unit 410 and the corresponding individual control unit in the communication control unit 411. However, the components of the PHY Layers and the MAC Lower Sublayers are not limited these components.

Note that, in an original communication operation, an Ack is transmitted from the non-STR non-AP MLD 1 when each PSDU is received, but, for ease of explanation, the series of flows is not shown in Fig. 10. That is, in the period T₃, for example, the transmission of an Ack is included in addition to the reception of a PSDU including the preamble and the padding, but, for convenience sake, the transmission of an Ack is not illustrated in Fig. 10.

In the description below, information to be transmitted between entities, and operations of the respective entities will be described with reference to Fig. 10.

In the example operations illustrated in Fig. 10, data transmitted from an AP MLD 1 in the link 1 is received and demodulated by the PHY Layer #1, and the MPDUs are then transferred to the MAC Lower Sublayer #1. A similar operation is also performed in the link 2.

### E-4-1. Operation of the PHY Layer in the Link 1, and Information to Be Exchanged between PHY and MAC

An arrow denoted by reference numeral 1001 in Fig. 10 indicates an operation in which the respective MPDUs, in addition to control information (hereinafter also referred to as RXVECTOR) such as the received signal strength indicator (RSSI), the number of spatial streams, and the format of the PPDU, are transmitted from the PHY Layer #1 to the MAC Lower Sublayer #1, on the basis of the information shown in the preamble.

The PHY Layer #1 calculates T₁, which is a demodulating operation period, on the basis of the information shown in the preamble, and then performs demodulation. After completing the demodulating operation, the PHY Layer #1 notifies the MAC Lower Sublayer #1 that the reception has been completed, and the time to send a notification of the end of the PSDU reception (in the example illustrated in Fig. 10, the end of the period T₁) is determined by the calculated T₁. An arrow denoted by reference numeral 1001' in Fig. 10 indicates the reception end notification. Through this reception end notification, the MAC Lower Sublayer #1 is notified not only of the reception end but also of the available state of the channel determined by the PHY Layer #1.

Note that, in a case where the received signal disappears (Carrier Lost) within the above period T₁, the PHY Layer #1 does not need to perform the demodulating operation.

### E-4-2. Operation of the MAC Lower Sublayer in the link 1, and Information to Be Exchanged between the MAC Lower and the Common Entity

After the notification indicated by the arrow 1001 from the PHY Layer #1 is performed, the MAC Lower Sublayer #1 analyzes the information included in the MPDUs, and notifies the Common Entity of the necessary information. An arrow denoted by reference numeral 1002 in Fig. 10 indicates this notification. For example, the MAC Lower Sublayer #1 analyzes whether or not the Support Link Effort subfield in the MPDUs indicates that the AP MLD is attempting to acquire the transmission right in the link 2, and notifies the Common Entity of this information. Likewise, the MAC Lower Sublayer #1 may also analyze whether or not the RDG/More PPDU subfield indicates a permission of another transmitting operation within the above period T₁, and notify the Common Entity of the information shown in this field.

Note that, in a case where Support Link Effort is included in the preamble, the information included in the Support Link Effort may be analyzed by the PHY Layer #1 in a similar manner, and the Common Entity may be notified of the information via the MAC Lower Sublayer #1.

### E-4-3. Operation of the PHY Layer in the Link 2, and Information to Be Exchanged between PHY and MAC

As indicated by an arrow denoted by reference numeral 1003 in Fig. 10, the PHY Layer #2 notifies the MAC Lower Sublayer #2 of each MPDU, in addition to control information (RXVECTOR) such as the received signal strength indicator (RSSI), the number of spatial streams, and the format of the PPDU, on the basis of the information shown in the preamble, in a manner similar to that described in the above section E-4-1.

The PHY Layer #2 calculates T₃, which is a demodulating operation period, on the basis of the information shown in the preamble, and then performs demodulation. After completing the demodulating operation, the PHY Layer #2 notifies the MAC Lower Sublayer #2 that the reception has been completed, and the time to send a notification of the end of the PSDU reception (in the example illustrated in Fig. 10, the end of the period T₃) is determined by the calculated T₃. An arrow denoted by reference numeral 1003' in Fig. 10 indicates the reception end notification. Through this reception end notification, the MAC Lower Sublayer #2 is notified not only of the reception end but also of the available state of the channel determined by the PHY Layer #2.

Note that, in a case where the received signal disappears (Carrier Lost) within the above period T₃, the PHY Layer #2 does not need to perform the demodulating operation.

### E-4-4. Operation of the MAC Lower Sublayer in the link 2, and Information to Be Exchanged between the MAC Lower and the Common Entity

After the notification indicated by the arrow 1003 from the PHY Layer #2 is performed, the MAC Lower Sublayer #2 analyzes the information included in the MPDUs, and notifies the Common Entity of the necessary information. An arrow denoted by reference numeral 1004 in Fig. 10 indicates this notification. For example, the MAC Lower Sublayer #2 analyzes reception of a signal from the AP MLD, and the information shown in the ML-CAS including Renewal Length (which is the information indicating the change in the information shown in the preamble transmitted in the link 1), and notifies the Common Entity of these pieces of information. For example, the MAC Lower Sublayer #2 analyzes whether or not the Basic Link Overwrite Flag subfield indicates that information in the preamble or the ML-CAS already transmitted in the link 1 is to be overwritten, and notifies the Common Entity of information indicating this and the information to be changed. Likewise, the MAC Lower Sublayer #2 may also analyze whether or not the RDG/More PPDU subfield indicates a permission of another transmitting operation within the above period T₁, and notify the Common Entity of the information shown in this field.

Note that, in a case where the ML-CAS field is included in the preamble, the information included in the ML-CAS field may be analyzed by the PHY Layer #1 in a similar manner, and the Common Entity may be notified of the information via the MAC Lower Sublayer #1.

### E-4-5. Operation of Common Entity

On the basis of the notification from the MAC Lower Sublayer #2, the Common Entity notifies the PHY Layer #1 or the MAC Lower Sublayer #1 of the link 1 included in the individual control unit 1 of at least information indicating the changed reception period (or reception end time), as indicated by arrows denoted by reference numerals 1005 and 1006 in Fig. 10. At this point of time, the Common Entity is notified of the following information (1) and (2) from the PHY Layers of the respective links via the MAC Lower Sublayers.

(1) Information indicating that the AP MLD is attempting to acquire the transmission right in the link 2
(2) Information indicating that the information transmitted through the preamble in the link 1 is to be changed

Note that, in a case where it is indicated that the information in the ML-CAS transmitted in the link 1 is to be changed, the Common Entity may also notify the MAC Lower Sublayer #1 of the information. That is, in a case where the RDG/More PPDU subfield in the ML-CAS transmitted in the link 2 includes information indicating that transmission from the non-STR non-AP MLD 1 to the AP MLD is permitted in the surplus period generated by the shortening of the reception period, the Common Entity notifies the MAC Lower Sublayer #1 or the PHY Layer #1 of the information. Although the Common Entity notifies the PHY Layer #1 via the MAC Lower Sublayer #1 in Fig. 10, the Common Entity may directly notify the PHY Layer #1.

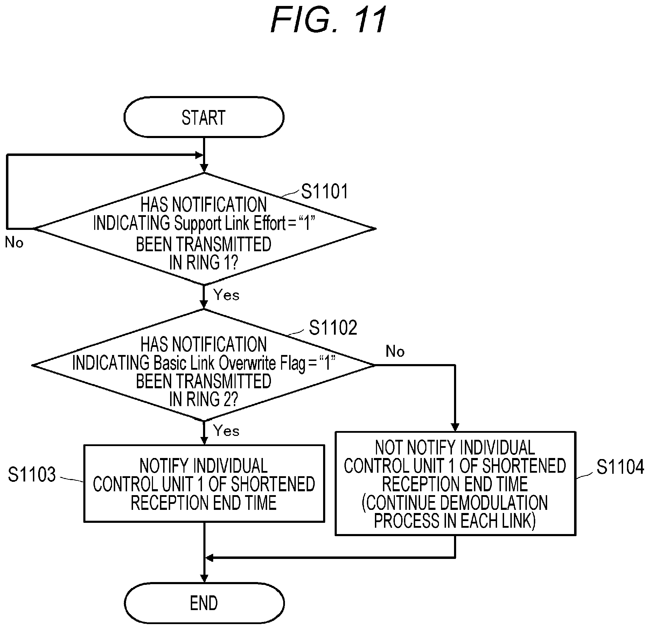

Fig. 11 shows, in the form of a flowchart, an operation to be performed by the Common Entity in the non-STR non-AP MLD.

When the MAC Lower Sublayer #1 notifies the Common Entity that Support Link Effort = "1" is shown in the PPDU transmitted in the link 1 (Yes in step S1101), the Common Entity checks whether or not the MAC Lower Sublayer #2 has notified that Basic Link Overwrite Flag = "1" is shown in the PPDU transmitted in the link 2 (step S1102) .

If the MAC Lower Sublayer #2 has notified that the Common Entity of Basic Link Overwrite Flag = "1" (Yes in step S1102), the transmission time of the PPDU in the link 1 has been shortened, and thus, the Common Entity notifies the individual control unit 1 of the shortened reception end time, on the basis of the information about the Renewal Length transmitted from the MAC Lower Sublayer #2 (step S1103) .

If the MAC Lower Sublayer #2 has not sent a notification that Basic Link Overwrite Flag = "1" (No in step S1102), on the other hand, the transmission time of the PPDU in the link 1 has not been shortened, and therefore, the Common Entity does not notify the individual control unit 1 of the shortened reception end time (step S1104). That is, the demodulation process is continued in each link.

### E-4-6. Notification of Reception End Time

When the PHY Layer #1 is notified of the change in the reception period directly or indirectly by the Common Entity, the PHY Layer #1 notifies the MAC Lower Sublayer #1 of the reception end time at the reception end time changed on the basis of the transmitted information, as indicated by an arrow denoted by reference numeral 1007 in Fig. 10. At this point of time, the PHY Layer #1 may notify the MAC Lower Sublayer #1 of the available state of the channel.

Further, at the time of the reception end notification as to the PSDU transmitted in the link 2, the PHY Layer #2 notifies the MAC Lower Sublayer #2 of the reception end time, as indicated by the arrow denoted by reference numeral 1003' in Fig. 10.

Here, the operation to be performed by the MAC Lower Sublayer #1 when a notification is sent from the PHY Layer #1 as indicated by the arrow 1007 after a notification is sent to the PHY Layer #1 as indicated by the arrow 1006 in Fig. 10 is additionally described.

The timing at which a notification is sent from the MAC Lower Sublayer #1 to the PHY Layer #1 may be after the PHY Layer #1 notifies the MAC Sublayer #1 of all the data (MPDUs).

For example, in a case where the PHY Layer #1 notifies the MAC Lower Sublayer #1 of a MPDU for every octet (byte), the changed transmission data length in the link 1 can be estimated on the basis of the information indicated by the Renewal Length transmitted from the PHY Layer #2. In view of this, after the PHY Layer #1 notifies the MAC Lower Sublayer #1 of the data of the number of octets corresponding to the estimated changed transmission data length, the MAC Lower Sublayer #1 may notify the PHY Layer #1 of information indicating a receiving operation end request in the PHY Layer #1. In response to this request, the PHY Layer #1 may sent at least either a notification of the reception end time or a notification of the available channel information, to the MAC Lower Sublayer #1.

According to Non-Patent Document 1, the data to be sent from the PHY Layer #1 to the MAC Lower Sublayer #1 for each octet mentioned above is indicated by PHY-DATA. indication.

### E-4-7. Details of Operations of the Common Entity and the MAC Lower Sublayers

Upon receipt of the notification of the reception end time from each PHY Layer, the Common Entity performs the following operations (1) to (3) as operations for the MAC Lower Sublayers as indicated by arrows denoted by reference numeral 1008 in Fig. 10.

### (1) Generation of an acknowledgment frame

The Common Entity generates information necessary for generating an acknowledgment frame, in response to error determination for received MPDUs. For example, in a case where received MPDUs are managed under certain numbers (such as sequence numbers), which number of MPDU has been successfully received is recorded, and information indicating the recorded information is transferred to each MAC Lower Sublayer.

### (2) Generation of information necessary for preamble generation

The Common Entity transfers control information necessary for operating as a non-STR non-AP MLD to the MAC Lower Sublayer or the PHY Layer. This control information includes information indicating that the non-STR non-AP MLD performs synchronized transmission using a plurality of links, and information indicating the length of the PPDU to be generated by the PHY Layer.

### (3) Transfer of the MPDUs to be transmitted to each MAC Lower Sublayer or each PHY Layer

The Common Entity transfers information about the MPDUs corresponding to the data to be transmitted to each MAC Lower Sublayer or each PHY Layer (the transfer corresponds to an operation indicated by an arrow 1009 in Fig. 10). At this point of time, the length of the data to be transmitted is within a range not exceeding the period T₁ in the link 1, and is indicated as T₂' in Fig. 10. Also, the type of data may be restricted in accordance with the information indicated by the AC Constraint transmitted from the AP MLD immediately before the transfer. For example, in a case where transmission of only prioritized data such as voice communication is permitted, the Common Entity transfer only the permitted data to the MAC Lower Sublayer or the PHY Layer, and performs control so that the PHY Layer transmits only the data.

In the above (1) to (3), not only the Common Entity but also the MAC Lower Sublayers may perform some of the functions as necessary.

After information is transferred from each MAC Lower Sublayer to each PHY Layer, the respective PHY Layers simultaneously transmit a PPDU. At this point of time, the acknowledgment frame and the MPDUs indicating the received data may be transmitted collectively as one PPDU.

### F. Second Embodiment

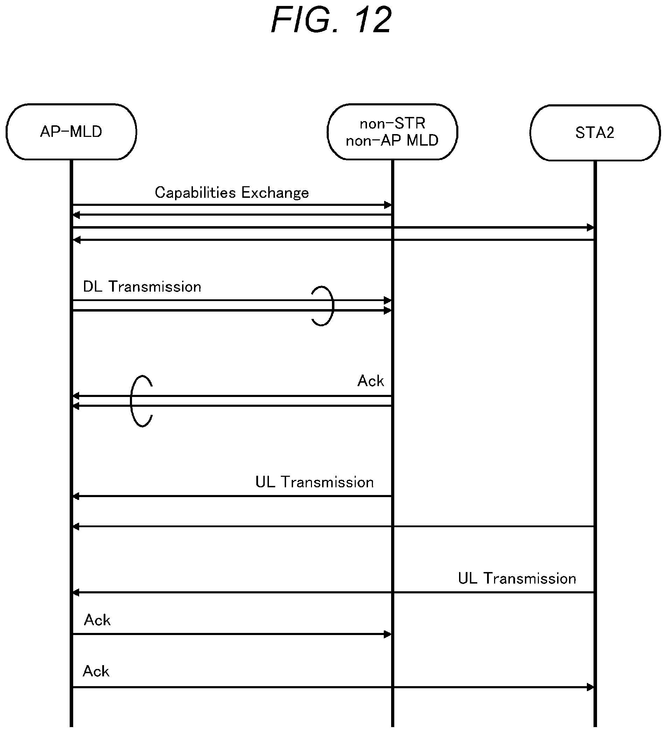

In the first embodiment described in the above section E, the method of the multi-link transmission in which the non-STR non-AP MLD 1 uses the link 1 and the link 2 at the same time in the surplus period has been explained. In the second embodiment to be described in this section F, on the other hand, the non-STR non-AP MLD 1 performs transmission using only the link 1 in the surplus period, but another STA (the STA 2 in the example illustrated in Fig. 12) performs transmission in the link 2 during the period or a period longer than that.

Fig. 12 illustrates an example communication sequence implemented in a wireless network system as the second embodiment. Note that the vertical axis is the time axis. In the first embodiment illustrated in Fig. 5, after DL Transmission, UL Transmission is performed only by the non-STR non-AP MLD in the surplus period. In the second embodiment illustrated in Fig. 12, on the other hand, UL Transmission is performed by another STA (the STA 2 in the example illustrated in Fig. 12) in the surplus period after DL Transmission. Note that the operations of Capabilities Exchange and DL Transmission are basically similar to those of the first embodiment.

### F-1. Operations of DL Transmission and UL Transmission

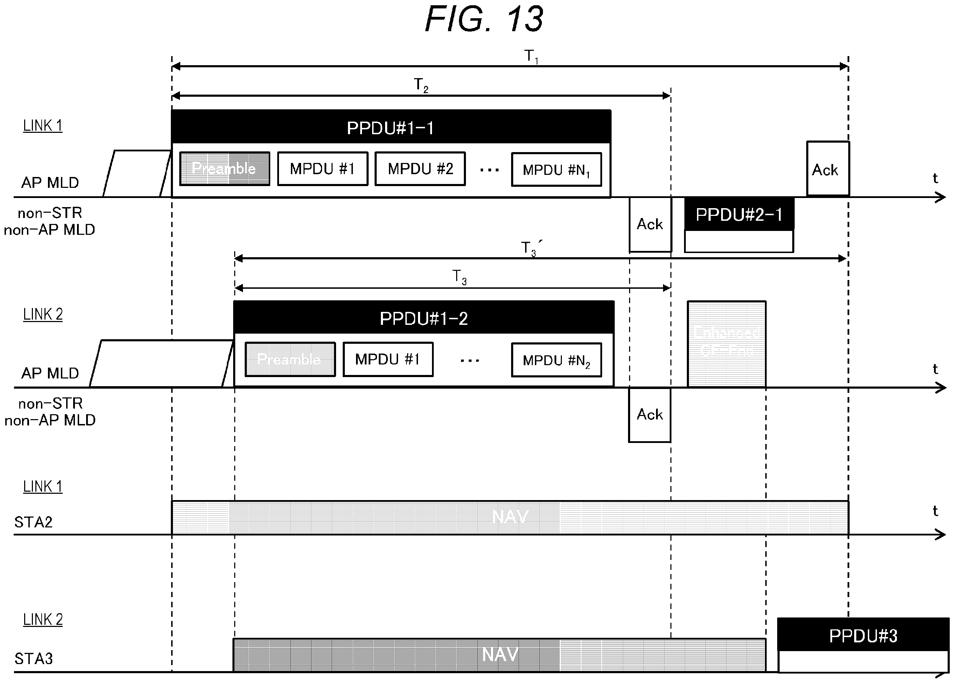

Fig. 13 shows specific examples of operations of DL Transmission and UL Transmission in detail. Note that the horizontal axis is the time axis. In Fig. 8, the AP MLD performs transmission to the non-STR non-AP MLD 1 in the link 1, and immediately after that, performs transmission also in the link 2. In Fig. 13, on the other hand, after the AP MLD transmits the PPDU #1-2 in the link 2, the AP MLD notifies another terminal of Enhanced CF (Contention Free)-End indicating release of the transmission right in the link 2.

For the PPDU previously transmitted in the link 1, the AP MLD determines, at the time of the transmission start, that a transmission period of T₁ is required to transmit the PPDU. After that, the AP MLD newly acquires the transmission right in the link 2, so that part of data originally to be transmitted in the link 1 can be transmitted in the link 2. Accordingly, the transmission period of the PPDU in the link 1 is shortened to T₂. At this point of time, the PPDU transmission end times in the link 1 and the link 2 are aligned within a specific error range.

In the above case, the preamble in the PPDU the AP MLD has transmitted in the link 1 includes information indicating the length of a PPDU to be transmitted in the link 1. Since the preamble is placed at the top of the PPDU, even if the PPDU length is changed after the preamble is transmitted, the receiving terminal cannot recognize the changed PPDU length.

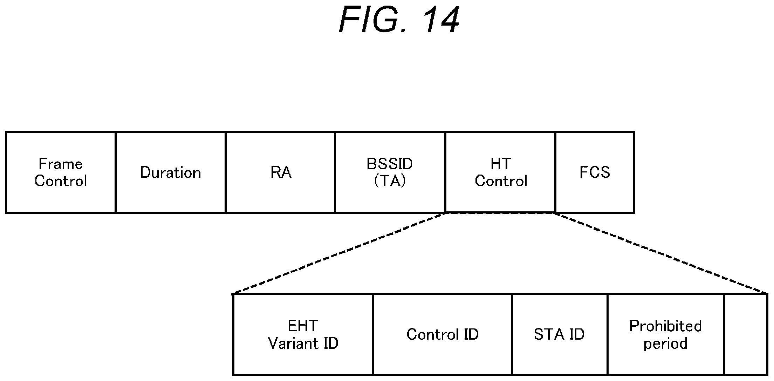

Here, aside from the non-STR non-AP MLD 1, a STA 2 that is a terminal not using the link 2, and a STA 3 that is a terminal not using the link 1 are present. In a case where transmission from a terminal other than the non-STR non-AP MLD 1 may be permitted after the AP MLD transmits the PPDU #1-2 in the link 2, the AP MLD notifies another terminal of Enhanced CF-End indicating the release of the transmission right. Accordingly, if the STA 3 obtains the transmission right in the link 2 after that, the STA 3 can transmit a PPDU #3. The AP MLD incorporates a transmission prohibition period for the non-STR non-AP MLD 1 (in the example illustrated in Fig. 13, the transmission prohibition period is T₃' - T₃) into Enhanced CF-End. Upon receipt of this Enhanced CF-End, the non-STR non-AP MLD 1 refrains from acquiring a transmission right during the specified transmission prohibition period. The frame configuration of Enhanced CF-End will be described in the next section F-2, with reference to Fig. 14.

Note that, as the RDG/More PPDU field of the PPDU the AP MLD transmits in the link 1 indicates a transmission permission in the transmission period T₁, the non-STR non-AP MLD can perform other PPDU transmission (which is uplink transmission) in the link 1 within the transmission period T₁. Also, as the RDG/More PPDU field of the PPDU the AP MLD transmits in the link 2 indicates a transmission prohibition in the transmission period T₁, the non-STR non-AP MLD does not perform other PPDU transmission in the link 1 within the transmission period T₁.

### F-2. Overview of Enhanced CF-End

Fig. 14 shows an example configuration of a frame to be transmitted with Enhanced CF-End. Enhanced CF-End is a frame for notifying the other side of communication in multi-link transmission including the current link of a transmission prohibition period in the link, and can indicate release of the transmission right in the link to another terminal by transmitting the frame.

The frame shown in Fig. 14 includes the respective fields of Frame Control, Duration, RA, BSSID, TA, HT Control, and FCS, but may include some other components not shown in the drawing.

The Frame Control field stores information indicating that the frame is Enhanced CF-End. The Duration field stores, in addition to the time for transmitting the frame, information indicating the period for acquiring a transmission period. The RA field stores information indicating one or a plurality of destination terminals. The BSSID (TA) field stores information indicating the terminal that is the transmission destination of the frame, or the BSSID to which the terminal that is the transmission destination of the frame belongs. The HT Control field stores other control information. The Frame Check Sequence (FCS) field stores information for error correction to be performed at the time of reception of the frame.

Of the above fields, the HT Control field includes the respective subfields of EHT variant ID, Control ID, STA ID, and Prohibited period.

The respective subfields of EHT variant ID and Control ID each store information indicating the type of HT Control. The STA ID field stores identification information about a terminal prohibited from being a transmission destination. The Prohibited period stores information indicating the transmission prohibition period for the terminal designated in the STA ID field. Note that the STA ID field may store information indicating the MAC address of the terminal in the corresponding link.

In the example illustrated in Fig. 13, the STA ID field in the Enhanced CF-End frame stores information indicating the non-STR non-AP MLD 1, and the Prohibited period stores information indicating the transmission prohibition period (T₃' - T₃). Therefore, the terminal that has received the Enhanced CF-End frame refrains from performing transmission to the non-STR non-AP MLD 1 during the transmission prohibition period (T₃' - T₃). Note that the STA ID field may store information indicating the MAC address of the non-STR non-AP MLD 1 in the link 2.

The terminal notified of the Enhanced CF-End frame is prohibited from notifying the non-STR non-AP MLD 1 of information during the specific period, on the basis of the information shown in the respective subfields of STA ID and Prohibited period.

### F-3. Control Operation of the Non-STR Non-AP MLD 1

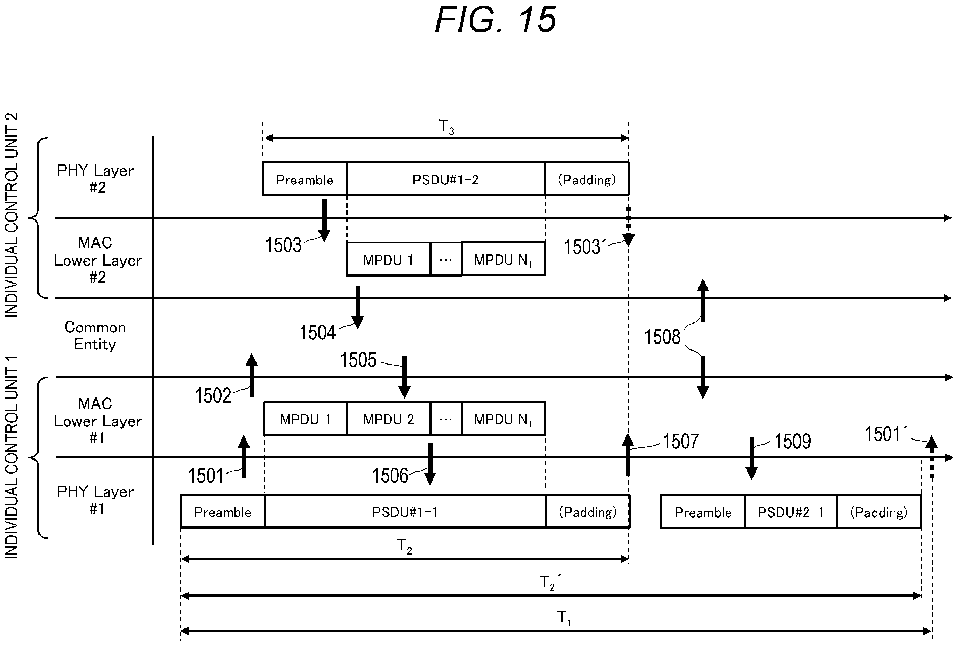

Fig. 15 shows examples of operations in the communication unit 410 in the non-STR non-AP MLD 1 that has been notified of the PPDU #1-1 and the PPDU #1-2 in DL Transmission. Note that the horizontal axis is the time axis. Note that, in Fig. 15, a plurality of MPDUs in a PPDU is collectively referred to as a PSDU.

An individual control unit 1 for the link 1 and an individual control unit 2 for the link 2 are disposed in the communication unit 410. The individual control unit 1 and the individual control unit 2 each include the respective logical entities of a PHY Layer #1 and a PHY Layer #2 that control the physical layers of the link 1 and the link 2, respectively, and a MAC Lower Sublayer #1 and a MAC Lower Sublayer #2 that control data processing in the link 1 and the link 2, respectively. In the communication unit 410, a Common Entity is further disposed as a logical entity that controls data processing common to the link 1 and the link 2. Information is exchanged between a Layer and a Layer, and between a Layer and an Entity via a SAP. In the Common Entity, the parameters to be applied in the respective MAC Lower Sublayers and the respective PHY Layers are calculated, in addition to the parameters to be used in the common data processing unit 413 in the communication unit 410. In an original communication operation, an Ack is transmitted from the non-STR non-AP MLD 1 when each PSDU is received, but, for ease of explanation, the series of flows related to Ack transmission is not shown in Fig. 15.

The control operation from the reception of the preamble in the link 1 to the notification of the reception end time is similar to that in the first embodiment (see the above sections E-4-1 to E-4-6), and therefore, explanation thereof is not made herein.

Upon receipt of the notification of the reception end time from each PHY Layer, the Common Entity performs the following operations (1) to (3) as operations for the MAC Lower Sublayers as indicated by arrows denoted by reference numeral 1508 in Fig. 15.

### (1) Generation of an acknowledgment frame

The Common Entity generates information necessary for generating an acknowledgment frame, in response to error determination for received MPDUs. For example, in a case where received MPDUs are managed under certain numbers (such as sequence numbers), which number of MPDU has been successfully received is recorded, and information indicating the recorded information is transferred to each MAC Lower Sublayer.

### (2) Generation of information necessary for preamble generation

The Common Entity transfers control information necessary for operating as a non-STR non-AP MLD to the MAC Lower Sublayer or the PHY Layer. This control information includes information indicating that the non-STR non-AP MLD performs synchronized transmission using a plurality of links, and information indicating the length of the PPDU to be generated by the PHY Layer.

### (3) Transfer of the MPDUs to be transmitted to each MAC Lower Sublayer or each PHY Layer

The Common Entity transfers information about the MPDUs corresponding to the data to be transmitted to each MAC Lower Sublayer or each PHY Layer (the transfer corresponds to an operation indicated by an arrow 1509 in Fig. 15). At this point of time, the length of the data to be transmitted is within a range not exceeding the period T₁ in the link 1, and is indicated as T₂' in Fig. 15.

In the above (1) to (3), not only the Common Entity but also the MAC Lower Sublayers may perform some of the functions as necessary.

Also, the Common Entity sends a notification of the transmission prohibition period as an operation (corresponding to the arrow 1508 in Fig. 15) for the individual communication unit 2 of the link 2, when receiving the notification of the reception end time from each PHY Layer. That is, the Common Entity notifies the link 2 of information indicating that transmission is prohibited at least during the transmission period of the PPDU #2-1.

### F-4. Operation of the STA 3

The other terminal notified of Enhanced CF-End refrains from performing transmission to the terminal specified in the STA ID field in the Enhanced CF-End frame during the transmission prohibition period specified in the Prohibited period.

In the example illustrated in Fig. 13, the AP MLD transmits the Enhanced CF-End frame in the link 2, after completing multi-link transmission using the link 1 and the link 2. The AP MLD sends a notification of the transmission prohibition period (T₃' - T₃) for the non-STR non-AP MLD 1 with this Enhanced CF-End frame.

The terminal notified of Enhanced CF-End in the link 2 performs transmission to a terminal other than the non-STR non-AP MLD 1. Although Fig. 13 shows that a terminal other than the AP MLD, or the STA 3, performs transmission in the link 2, the AP MLD may perform transmission to a terminal other than the non-STR non-AP MLD in the link 2.

### G. Third Embodiment

In the first and second embodiments described above, cases where the receiving terminal in DL Transmission is a non-STR non-AP MLD have been described. In a third embodiment, however, a case where the receiving terminal in DL Transmission is a STR non-AP MLD is described. Accordingly, in the third embodiment, the transmission end times of the PPDUs to be transmitted to the receiving terminal do not need to be the same in the respective links.

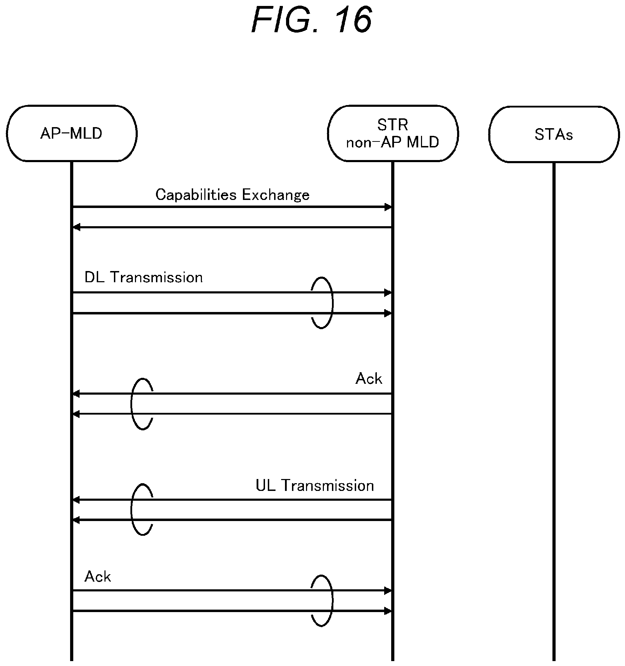

Fig. 16 illustrates an example communication sequence implemented in a wireless network system as the third embodiment. Note that the vertical axis is the time axis. Here, the wireless network system is a wireless network system in which one AP MLD, one STR non AP MLD, and one or a plurality of STAs (hereinafter referred to as the "STAs") are present. In the example communication sequence shown in Fig. 16, the following four kinds of transmission are illustrated. The frame and the like to be transmitted in each transmitting operation will be described later in detail.

(1) Capabilities Exchange: Exchange of information indicating the capability of each terminal
(2) DL Transmission: Data transmission from the AP MLD to the STR non-AP MLD
(3) UL Transmission: Data transmission from the STR non-AP MLD to the AP MLD
(4) Ack: Acknowledgment of receipt in response to each data transmission in the above (2) and (3)

### G-1. Points to Be Noted

Before each transmitting operation is described, some points to be noted are explained.

### G-1-1. Notes on Transmission Rights

Fig. 16 shows a sequence in transmission to be performed by the AP MLD and the STR non-AP MLD, but does not show transmission with the STAs. This is because Fig. 16 shows an example in which the AP MLD or the STR non-AP MLD acquires a transmission right before the STAs, and performs each transmitting operation. Although not shown in the drawing, transmission from the STAs, or transmission to the STAs may occur. For example, DL Transmission may be performed after transmission occurs between the AP MLD and some of the STAs immediately after Capabilities Exchange.

In DL Transmission, while transmission is performed in a certain link (hereinafter referred to as the "link 1"), transmission is performed in another link. Also, two Acks and UL Transmission may be performed under the transmission right (the period in which transmission is allowed) secured by the transmission in the link 1.

### G-1-2. Notes on DL Transmission

As described above, in DL Transmission, transmission in another link (link 2) occurs during transmission in a certain link (link 1).

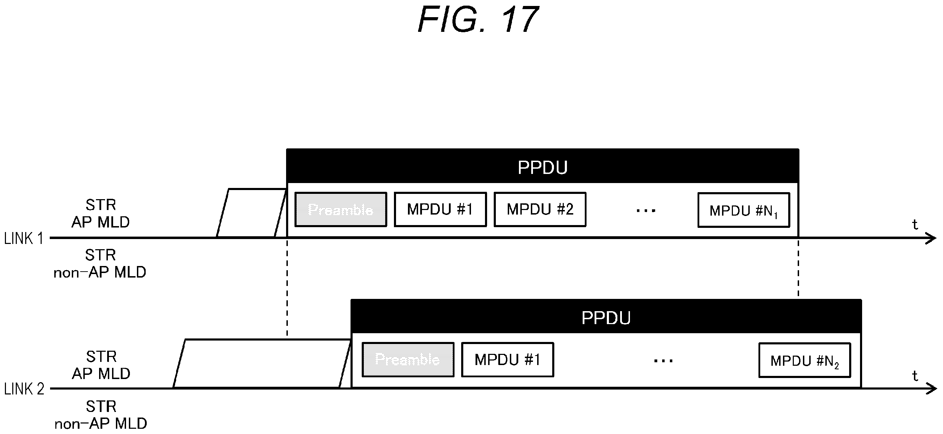

Fig. 17 shows an example operation in which transmission is performed in the link 1 and the link 2 in DL Transmission. Note that the horizontal axis is the time axis. This drawing illustrates an example in which there are the two links of the link 1 and the link 2, and transmission occurs in the link 2 after the start of transmission in the link 1.

The AP MLD transmits a data unit (PPDU) in the link 1. In the PPDU, control information such as the PPDU length is included in the preamble, which is the top portion of the PPDU. The preamble is followed by MPDUs that are the data. Note that, in a case where the receiving terminal is a STR MLD, the transmission end times or the reception end times of the respective PPDUs do not need to be the same.

### G-1-3. Notes on Each Transmission Order

Fig. 16 illustrates a case where Capabilities Exchange is performed on the STR non-AP MLD from the AP MLD, but Capabilities Exchange may be simultaneously transmitted to the STR non-AP MLD and the STAs. In a specific example, this may be performed with beacon signals the AP MLD periodically transmits to a plurality of terminals in the surroundings.

Although not shown in Fig. 16, Capabilities Exchange may also occur from the STAs to the AP MLD. As a specific example, after the AP MLD emits a beacon signal, transmission from the STAs to the AP MLD may be performed. Note that the order of Capabilities Exchange to be performed from the STR non-AP MLD and the STAs is not limited to any particular order.

Each sequence may be partially omitted as necessary, and the order may not be as illustrated in Fig. 16. For example, if it is determined that an Ack is unnecessary in accordance with the type of the data to be transmitted, the Ack may not be transmitted.

### G-2. Capabilities Exchange (Capability Notification)

The AP MLD and the STR non-AP MLD mutually perform information notification (Capabilities Exchange) regarding the capability of their own terminals. The capabilities mentioned herein indicate whether or not the terminal can perform STR transmission and the number of links in which transmission can be performed simultaneously, but are not limited to these aspects. Capability Exchange may be performed by being included in beacon signals that are periodically transmitted by the respective terminals, for example, or in information notification (Association) for establishing connection between terminals after the beacon signals.

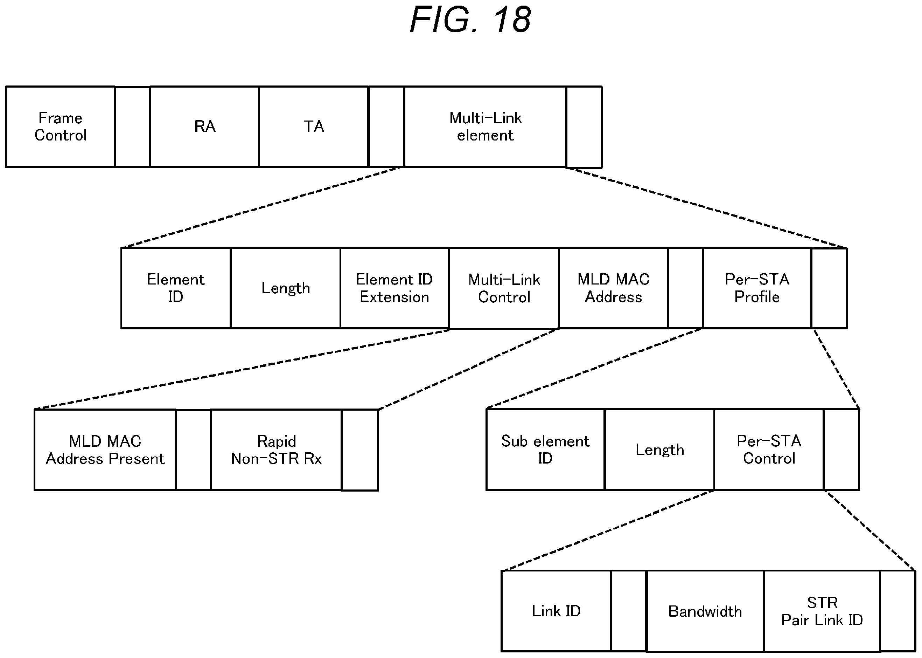

Fig. 18 shows an example configuration of a frame to be transmitted with Capabilities Exchange. The frame shown in the drawing includes the respective fields of Frame Control, a RA, a TA, and a Multi-Link element. However, the components of the frame are not limited only to these.

The Frame Control field stores information indicating that the frame is a frame to be transmitted with Capabilities Exchange. Information indicating a source terminal and a destination terminal is stored in the respective fields of the RA and the TA. The Multi-Link element field stores information indicating availability of STR transmission, available links, and the number of links that can be used at the same time for the terminal that transmits the frame.

For example, a terminal-specific MAC address may be indicated in the RA and the TA. Further, in a case where the source terminal and the destination terminal are a MLD in particular, a plurality of MAC addresses may be allocated to one MLD. A specific example of such a case is a case where a MAC address is allocated to each individual communication set in one MLD, or each link to be used by one MLD. That is, the RA and the TA do not indicate only a MLD, but are information for identifying individual communication sets or links of the MLD, in addition to the MLD that transmits the frame. Note that the individual communication sets or the links may be identified together with MLD MAC Address in the Multi-Link element as described later.

The Multi-Link element stores the respective fields of Element ID, Length, Element ID Extension, Multi-Link Control, MLD MAC Address, and Per-STA Profile.

The Element ID field stores information indicating that the element is a Multi-Link element. The Length field stores information indicating the bit length of the Multi-Link element. The Multi-Link Control field stores information indicating the presence/absence of a subsequent MLD MAC Address. The MLD MAC Address field stores identification information individually allocated to the MLD terminal, regardless of the links or the individual communication sets. The Per-STA Profile field stores information regarding each link or each individual communication set.

The Multi-Link Control field stores the respective subfields of MLD MAC Address Present and Rapid STR Rx. The MLD MAC Address Present field stores information indicating that a MLD MAC Address is present. The Rapid STR Rx field stores information indicating that asynchronized transmission as illustrated in Fig. 17 can be received in a case where the terminal that transmits the frame operates as a STR MLD in DL Transmission.

The Per-STA Profile field stores the respective subfields of Subelement ID, Length, and Per-STA Control. Note that there may be a plurality of Per-STA Profiles, and information regarding different links or individual communication sets is shown.

The Subelement ID field stores information indicating that the subfield is Per-STA Profile. The Length field stores information indicating the bit length of Per-STA Profile. The Per-STA Control field stores information regarding the target link or individual communication set shown in the Per-STA Profile field.

Specifically, the Per-STA Control field may store the respective subfields of Link ID, Bandwidth, and STR Pair Link ID. The Link ID field stores information indicating the target link or individual communication set. The Bandwidth field stores information indicating the frequency band in which the link or the individual communication set indicated by Link ID can be transmitted. The STR Pair Link ID field stores information indicating a link or an individual communication set that operates as the STR MLD when used simultaneously in the link or the individual communication set indicated by Link ID.

For example, in a case where information indicating "link 1" is stored in the Link ID field, and information indicating "link 2" is stored in the STR Pair Link ID field, when reception (or transmission) is performed in the link 1 and the link 2 at the same time, it can be understood that the terminal that transmits the frame can perform transmission as a STR MLD.

### G-3. After DL Transmission

Data transmission from the AP MLD to the STR non-AP MLD is performed in DL Transmission, and data transmission from the STR non-AP MLD to the AP MLD is performed in UL Transmission. As described above, the AP MLD acquires the transmission right in one link (link 1) to perform data transmission herein, but data transmission is started in another link (link 2) during the transmission.

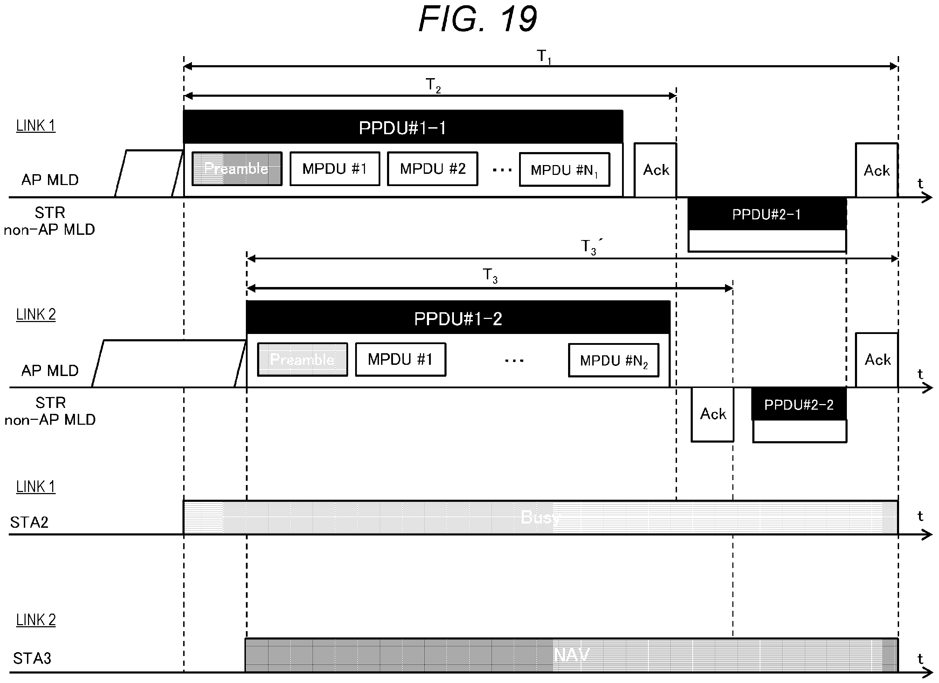

Fig. 19 shows specific examples of operations of DL Transmission and UL Transmission in detail. Note that the horizontal axis is the time axis. In Fig. 19, the AP MLD performs transmission to the STR non-AP MLD 1 in the link 1, and immediately after that, performs transmission also in the link 2. Through the prior Capabilities Exchange, the AP MLD recognizes that the STR non-AP MLD 1 is compatible with multi-link transmission using the link 1 and the link 2, and asynchronized transmission can be received.

For the PPDU previously transmitted in the link 1, the AP MLD determines, at the time of the transmission start, that a transmission period of T₁ is required to transmit the PPDU. After that, the AP MLD newly acquires the transmission right in the link 2, so that part of data originally to be transmitted in the link 1 can be transmitted in the link 2. Accordingly, the transmission period of the PPDU in the link 1 is shortened to T₂. At this point of time, since the receiving terminal is a STR, the PPDU transmission end times in the link 1 and the link 2 may be any appropriate times, and are not necessarily aligned.

In the above case, the preamble in the PPDU transmitted in the link 1 by the AP MLD includes information indicating the length of a PPDU to be transmitted in the link 1. However, since the preamble is placed at the top of the PPDU, even if the PPDU length is changed after the preamble is transmitted, the receiving terminal cannot recognize the changed PPDU length.

Here, aside from the STR non-AP MLD 1, a STA 2 that is a terminal not using the link 2, and a STA 3 that is a terminal not using the link 1 are present.

In a case where the AP MLD can acquire the transmission right and perform notification in the link 2, the AP MLD can notify the STR non-AP MLD 1 that the transmission period in the link 1 has been shortened, by incorporating information indicating that the length of the PPDU transmitted in the link 1 has been changed from T₁ to T₂ into the PPDU to be transmitted in the link 2. Further, receiving a similar notification, a STA 3 using the link 2 can determine an idle state of the link 1 after the transmission period T₂. On the other hand, since the STA 2 does not use the link 2, the STA 2 is not notified of the information indicating that the transmission period in the link 1 has been shortened from T₁ to T₂. Therefore, the STA 2 can determine an idle state of the link 1 only after T₁.

Therefore, the AP MLD and the STR non-AP MLD 1 perform other PPDU transmission again within the transmission period T₁ of which the AP MLD and the STR non-AP MLD 1 have been notified beforehand through the preamble in the link 1. Fig. 19 shows an example in which, among the PPDUs to be newly transmitted, the one to be transmitted in the link 1 is referred to as a PPDU #2-1, and the one to be transmitted in the link 2 is referred to as a PPDU #2-2. Both PPDUs are not transmitted from the AP MLD, but are transmitted from the STR non-AP MLD to the AP MLD. That is, the STR non-AP MLD 1 performs transmission to the AP MLD within the period T₁ in which the transmission right acquired by the AP MLD is valid. The AP MLD can perform other PPDU transmission again within the period T₁ by notifying the STR non-AP MLD of a permission of uplink transmission on the basis of the RDG/More PPDU written in the PPDU being transmitted in the link 1 and the link 2 (this permission is a reverse direction grant (RDG)).

Note that, in the example illustrated in Fig. 19, the transmission end times of the PPDU #2-1 and the PPDU #2-2 are aligned. However, since the non-AP MLD as the transmission source is a STR, the transmission end times do not need to be the same. The STR non-AP MLD has returned an Ack in response to the PPDU #1-2 in the link 1, before completing the reception of the PPDU #1-1 from the AP MLD in the link 2.

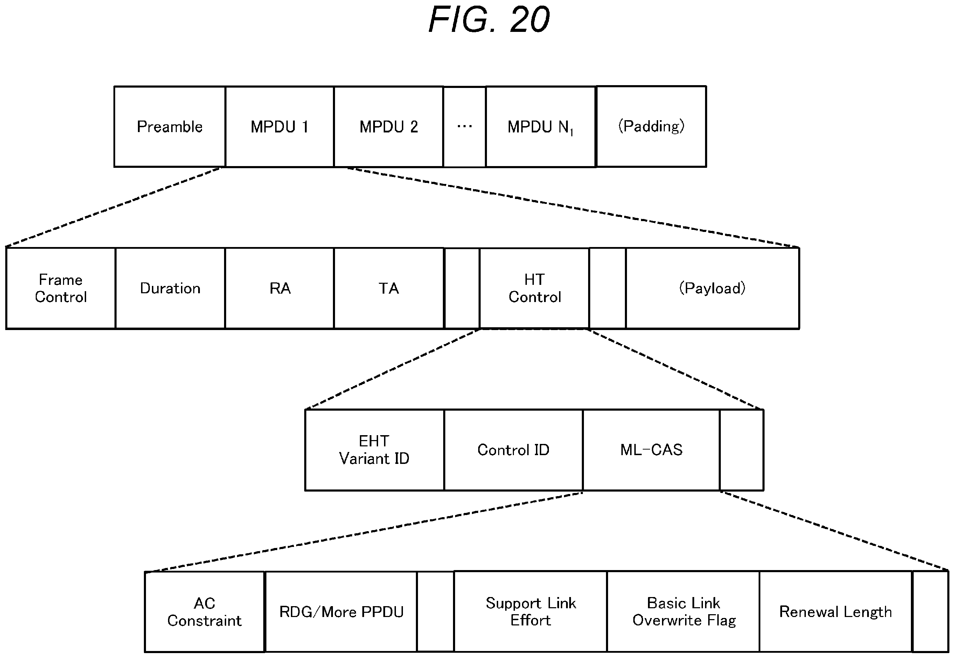

Fig. 20 shows an example configuration of a PPDU to be transmitted in the link 1 and the link 2. The PPDU includes a preamble and one or a plurality of MPDUs. Note that an area (padding) for adjusting the data length may be included at the end of the PPDU as necessary.

The preamble includes information necessary for demodulating the subsequent MPDUs, in addition to time synchronization, frequency synchronization, and channel estimation in the terminal that receives the current PPDU. As described above, in addition to the information indicating the PPDU length, information indicating the frequency band in which the MPDUs are to be transmitted, the MCS being used, and the like may also be included.

Each MPDU includes the data to be transmitted, in addition to the preamble. Each MPDU may store the respective fields of Control, Duration, RA and TA, HT Control, and Payload. The Frame Control field stores information indicating the type of the frame of the MPDU. The Duration field stores information indicating the transmission period in DL Transmission. The respective fields of the RA and the TA store information indicating a source terminal and a destination terminal, respectively. The HT Control field stores other control information. The Payload field stores the data information to be transmitted, in addition to the above control information.

Note that, in a case where a plurality of MPDUs is stored in the PPDU, Frame Control, Duration, RA, TA, and HT Control are stored in the first MPDU, but these items may not be stored in the subsequent MPDUs.

In particular, the HT Control field stores the respective subfields of EHT variant ID, Control ID, and ML-CAS. Information indicating the type of HT Control is stored in each of EHT variant ID and Control ID. The ML-CAS field stores the type of data to be transmitted in the link, and information regarding the links other than the link in which the frame is transmitted.

The ML-CAS field stores at least one of the subfields of AC Constraint, RDG/More PPDU, Support Link Effort, Basic Link Overwrite Flag, and Renewal Length.

The AC Constraint field stores information indicating that there is a constraint on the type of traffic that can be transmitted in the current DL transmission. The RDG/More PPDU field stores information indicating either (1) or (2) described below.

(1) Information indicating that, in a case where the terminal transmitting the frame is a terminal that has acquired the transmission right, transmission is permitted within the range in which the transmission right reaches the destination terminal (that is, the permission is a reverse direction grant (RDG))
(2) Information indicating whether or not there is a subsequent PPDU, in a case where the permission in (1) has been reported, and a PPDU is transmitted

The Support Link Effort field stores information indicating whether the terminal transmitting the frame is attempting to acquire a transmission right in another link other than the link transmitting the frame.

The Basic Link Overwrite Flag field stores information indicating whether or not to overwrite part of the information included in the preamble or ML-CAS in the receiving terminal, in a case where another link that is not the link transmitting the frame is already used for transmission.

The Renewal Length field is included in the PPDU transmitted in the link 2, and stores information indicating a change in the PPDU length of the link 1 or the changed length of the PPDU in the link 1.

For example, in DL Transmission, the Support Link Effort subfield is stored in a MPDU in the PPDU #1-1 to be transmitted in the link 1 by the AP MLD, and the Basic Link Overwrite Flag subfield and the Renewal Length subfield are stored in the PPDU #1-2 to be transmitted in the link 2 by the AP MLD.

In the example operation illustrated in Fig. 19, the AP MLD can indicate that the AP MLD is attempting to acquire the transmission right in the link 2 (which is the Support Link), with the Support Link Effort field of the PPDU to be transmitted in the link 1 (which is the Basic Link). Further, in a case where the link 2 (which is the Support Link) is already used for transmission, the AP MLD can indicate, with the Basic Link Overwrite Flag subfield, that the information included in ML-CAS (specifically, the change in the PPDU length of the link 1 (which is the Basic Link) or the changed PPDU length of the link 1, which is written in the subsequent Renewal Length field) has been overwritten.

Note that, although ML-CAS is stored in each MPDU in Fig. 20, ML-CAS is not necessarily stored in all the MPDUs. For example, ML-CAS may be stored only in the MPDU at the top, or ML-CAS may be stored not in the MPDUs but in the preamble.

Referring back to Fig. 19, to perform transmission not only in the link 1 but also in the link 2 in the period shortened in the link 1, information indicating T₃' in Fig. 19 is stored into the Duration field in the PPDU #1-2 to be transmitted in the link 2. Also, the RDG/More PPDU subfield includes information indicating that data may be transmitted to the non-STR non-AP MLD, and to the AP MLD within the period T₃' in the link 1 and the link 2 (that is, the information indicates a reverse direction grant (RDG)). As the RDG/More PPDU field of each PPDU the AP MLD transmits in the link 1 and the link 2 indicates a transmission permission in the transmission period T₁, the STR non-AP MLD can perform other PPDU transmission (which is uplink transmission) within the transmission period T₁.

### G-4. Control Operation of the STR Non-AP MLD 1

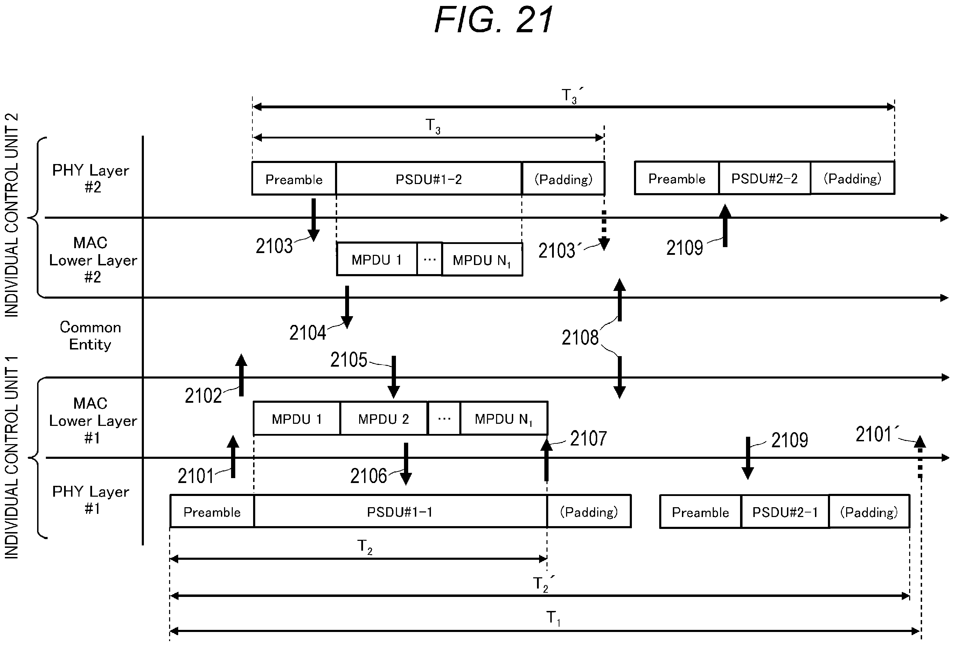

Fig. 21 shows examples of operations of the respective logical entities in the communication unit 410 in the STR non-AP MLD 1 that has been notified of the PPDU #1-1 and the PPDU #1-2 in DL Transmission. Note that the horizontal axis is the time axis. Note that, in Fig. 21, a plurality of MPDUs in a PPDU is collectively referred to as a PSDU.

An individual control unit 1 for the link 1 and an individual control unit 2 for the link 2 are disposed in the communication unit 410. The individual control unit 1 and the individual control unit 2 each include the respective logical entities of a PHY Layer #1 and a PHY Layer #2 that control the physical layers of the link 1 and the link 2, respectively, and a MAC Lower Sublayer #1 and a MAC Lower Sublayer #2 that control data processing in the link 1 and the link 2, respectively. In the communication unit 410, a Common Entity is further disposed as a logical entity that controls data processing common to the link 1 and the link 2. Further, information is exchanged between a Layer and a Layer, and between a Layer and an Entity via a SAP. In the Common Entity, the parameters to be applied in the respective MAC Lower Sublayers and the respective PHY Layers are calculated, in addition to the parameters to be used in the common data processing unit 413 in the communication unit 410.

The PHY Layers each include an antenna 440, and an amplification unit 417, a wireless interface unit 416, a signal processing unit 415, and an individual control unit 414 in the communication unit 410, and the MAC Lower Sublayers each include an individual data processing unit 414 in the communication unit 410 and the corresponding individual control unit in the communication control unit 411. However, the components of the PHY Layers and the MAC Lower Sublayers are not limited these components.

Note that, in an original communication operation, an Ack is transmitted from the STR non-AP MLD 1 when each PSDU is received, but, for ease of explanation, the series of flows is not shown in Fig. 21. That is, in the period T₃, for example, the transmission of an Ack is included in addition to the reception of a PSDU including the preamble and the padding, but the transmission of an Ack is not illustrated in Fig. 21.

In the description below, information to be transmitted between entities, and operations of the respective entities will be described with reference to Fig. 21.

First, data transmitted from the AP MLD 1 in the link 1 is received and demodulated by the PHY Layer #1, and the MPDUs are then transferred to the MAC Lower Sublayer #1. A similar operation is also performed in the link 2.

### G-4-1. Operation of the PHY Layer in the Link 1, and Information to Be Exchanged between PHY and MAC

An arrow denoted by reference numeral 2101 in Fig. 21 indicates an operation in which the PHY Layer #1 notifies the MAC Lower Sublayer #1 of each MPDU, in addition to control information (RXVECTOR) such as the received signal strength indicator (RSSI), the number of spatial streams, and the format of the PPDU, on the basis of the information shown in the preamble.

The PHY Layer #1 calculates T₁, which is a demodulating operation period, on the basis of the information shown in the preamble, and then performs demodulation. After completing the demodulating operation, the PHY Layer #1 notifies the MAC Lower Sublayer #1 that the reception has been completed, and the time to send a notification of the end of the PSDU reception (in the example illustrated in Fig. 21, the end of the period T₁) is determined by the calculated T₁. An arrow denoted by reference numeral 2101' in Fig. 21 indicates the reception end notification. Through this reception end notification, a notification not only of the reception end but also of the available state of the channel determined by the PHY Layer #1 is sent.

Note that, in a case where the received signal disappears (Carrier Lost) within the above period T₁, the PHY Layer #1 does not need to perform the demodulating operation.

### G-4-2. Operation of the MAC Lower Sublayer in the link 1, and Information to Be Exchanged between the MAC Lower and the Common Entity

After the notification indicated by the arrow 2101 from the PHY Layer #1 is performed, the MAC Lower Sublayer #1 analyzes the information included in the MPDUs, and notifies the Common Entity of the necessary information. An arrow denoted by reference numeral 2102 in Fig. 21 indicates this notification. For example, the MAC Lower Sublayer #1 analyzes whether or not the Support Link Effort subfield in the MPDUs indicates that the AP MLD is attempting to acquire the transmission right in the link 2, and notifies the Common Entity of this information. Likewise, the MAC Lower Sublayer #1 may also analyze whether or not the RDG/More PPDU subfield indicates a permission of another transmitting operation within the above period T₁, and notify the Common Entity of the information shown in this field.

Note that, in a case where Support Link Effort is included in the preamble, the information included in the Support Link Effort may be analyzed by the PHY Layer #1, and the Common Entity may be notified of the information via the MAC Lower Sublayer #1.

### G-4-3. Operation of the PHY Layer in the Link 2, and Information to Be Exchanged between PHY and MAC

As indicated by an arrow denoted by reference numeral 2103 in Fig. 21, the PHY Layer #2 notifies the MAC Lower Sublayer #2 of each MPDU, in addition to control information (RXVECTOR) such as the received signal strength indicator (RSSI), the number of spatial streams, and the format of the PPDU, on the basis of the information shown in the preamble, in a manner similar to that described in the above section G-4-1.

The PHY Layer #2 calculates T₃, which is a demodulating operation period, on the basis of the information shown in the preamble, and then performs demodulation. After completing the demodulating operation, the PHY Layer #2 notifies the MAC Lower Sublayer #2 that the reception has been completed, and the time to send a notification of the end of the PSDU reception (in the example illustrated in Fig. 21, the end of the period T₃) is determined by the calculated T₃. An arrow denoted by reference numeral 2103' in Fig. 21 indicates the reception end notification. Through this reception end notification, the MAC Lower Sublayer #2 is notified not only of the reception end but also of the available state of the channel determined by the PHY Layer #2.

Note that, in a case where the received signal disappears (Carrier Lost) within the above period T₃, the PHY Layer #2 does not need to perform the demodulating operation.

### G-4-4. Operation of the MAC Lower Sublayer in the link 1, and Information to Be Exchanged between the MAC Lower and the Common Entity

After the notification indicated by the arrow 2103 from the PHY Layer #2 is performed, the MAC Lower Sublayer #2 analyzes the information included in the MPDUs, and notifies the Common Entity of the necessary information. An arrow denoted by reference numeral 2104 in Fig. 21 indicates this notification. For example, the MAC Lower Sublayer #2 analyzes reception of a signal from the AP MLD, and the information shown in the ML-CAS including Renewal Length (which is the information indicating the change in the information shown in the preamble transmitted in the link 1), and notifies the Common Entity of these pieces of information. For example, the MAC Lower Sublayer #2 analyzes whether or not the Basic Link Overwrite Flag subfield indicates that information in the preamble or the ML-CAS already transmitted in the link 1 is to be overwritten, and notifies the Common Entity of information indicating this and the information to be changed. Likewise, the MAC Lower Sublayer #2 may also analyze whether or not the RDG/More PPDU subfield indicates a permission of another transmitting operation within the above period T₁, and notify the Common Entity of the information shown in this field.

Note that, in a case where Support Link Effort is included in the preamble, the information included in the Support Link Effort may be analyzed by the PHY Layer #1, and the Common Entity may be notified of the information via the MAC Lower Sublayer #1.

### G-4-5. Operation of Common Entity

On the basis of the notification from the MAC Lower Sublayer #2, the Common Entity notifies the PHY Layer #1 or the MAC Lower Sublayer #1 of the link 1 included in the individual control unit 1 of at least information indicating the changed reception period (or reception end time), as indicated by arrows denoted by reference numerals 2105 and 2106 in Fig. 21. At this point of time, the Common Entity is notified of the following information (1) and (2) from the PHY Layers of the respective links via the MAC Lower Sublayers.

(1) Information indicating that the AP MLD is attempting to acquire the transmission right in the link 2
(2) Information indicating that the information transmitted through the preamble in the link 1 is to be changed

Note that, in a case where it is indicated that the information in the ML-CAS transmitted in the link 1 is to be changed, the Common Entity may also notify the MAC Lower Sublayer #1 of the information. That is, in a case where the RDG/More PPDU subfield in the ML-CAS transmitted in the link 2 includes information indicating that transmission from the STR non-AP MLD 1 to the AP MLD is permitted in the surplus period generated by the shortening of the reception period, the Common Entity notifies the MAC Lower Sublayer #1 or the PHY Layer #1 of the information. Although the Common Entity notifies the PHY Layer #1 via the MAC Lower Sublayer #1 in Fig. 21, the Common Entity may directly notify the PHY Layer #1.

The Common Entity operates in accordance with the processing procedures shown in Fig. 11. Explanation of the operation of the Common Entity, which corresponds to the flowchart shown in Fig. 11, is not made herein.

### G-4-6. Notification of Reception End Time

When the PHY Layer #1 is notified of the change in the reception period directly or indirectly by the Common Entity, the PHY Layer #1 notifies the MAC Lower Sublayer #1 of the reception end time at the reception end time changed on the basis of the transmitted information, as indicated by an arrow denoted by reference numeral 2107 in Fig. 21. At this point of time, the Common Entity may notify the MAC Lower Sublayer #1 of the available state of the channel.

Further, at the time of the reception end notification as to the PSDU transmitted in the link 2, the PHY Layer #2 notifies the MAC Lower Sublayer #2 of the reception end time, as indicated by the arrow denoted by reference numeral 2103' in Fig. 21.

Here, the operation to be performed by the MAC Lower Sublayer #1 when a notification is sent from the PHY Layer #1 as indicated by the arrow 2107 after a notification is sent to the PHY Layer #1 as indicated by the arrow 2106 in Fig. 21 is additionally described.

The timing at which a notification is sent from the MAC Lower Sublayer #1 to the PHY Layer #1 may be after the PHY Layer #1 notifies the MAC Sublayer #1 of all the data (MPDUs).

For example, in a case where the PHY Layer #1 notifies the MAC Lower Sublayer #1 of a MPDU for every octet (byte), the changed transmission data length in the link 1 can be estimated on the basis of the information indicated by the Renewal Length transmitted from the PHY Layer #2. In view of this, after the PHY Layer #1 notifies the MAC Lower Sublayer #1 of the data of the number of octets corresponding to the estimated changed transmission data length, the MAC Lower Sublayer #1 may notify the PHY Layer #1 of information indicating a receiving operation end request in the PHY Layer #1. In response to this request, the PHY Layer #1 may sent at least either a notification of the reception end time or a notification of the available channel information, to the MAC Lower Sublayer #1.

### G-4-7. Details of Operations of the Common Entity and the MAC Lower Sublayers

Upon receipt of the notification of the reception end time from each PHY Layer, the Common Entity performs the following operations (1) to (3) as operations for the MAC Lower Sublayers as indicated by arrows denoted by reference numeral 2108 in Fig. 21.

### (1) Generation of an acknowledgment frame

The Common Entity generates information necessary for generating an acknowledgment frame, in response to error determination for received MPDUs. For example, in a case where received MPDUs are managed under certain numbers (such as sequence numbers), which number of MPDU has been successfully received is recorded, and information indicating the recorded information is transferred to each MAC Lower Sublayer.

### (2) Generation of information necessary for preamble generation

The Common Entity transfers control information necessary for operating as a non-STR non-AP MLD to the MAC Lower Sublayer or the PHY Layer. This control information includes information indicating that the non-STR non-AP MLD performs synchronized transmission using a plurality of links, and information indicating the length of the PPDU to be generated by the PHY Layer.

### (3) Transfer of the MPDUs to be transmitted to each MAC Lower Sublayer or each PHY Layer

The Common Entity transfers information about the MPDUs corresponding to the data to be transmitted to each MAC Lower Sublayer or each PHY Layer (the transfer corresponds to an operation indicated by an arrow 2109 in Fig. 21). At this point of time, the length of the data to be transmitted is within a range not exceeding the period T₁ in the link 1, and is indicated as T₂' in Fig. 21. Also, the type of data may be restricted in accordance with the information indicated by the AC Constraint transmitted from the AP MLD immediately before the transfer. For example, in a case where transmission of only prioritized data such as voice communication is permitted, the Common Entity transfer only the permitted data to the MAC Lower Sublayer or the PHY Layer, and performs control so that the PHY Layer transmits only the data.

In the above (1) to (3), not only the Common Entity but also the MAC Lower Sublayers may perform some of the functions as necessary.

After information is transferred from each MAC Lower Sublayer to each PHY Layer, the respective PHY Layers simultaneously transmit a PPDU. At this point of time, the acknowledgment frame and the MPDUs indicating the received data may be transmitted collectively as one PPDU.

### H. Summary

As described in each embodiment, according to the present disclosure, in a case where transmission using the link 2 is further performed while the STR AP MLD is performing transmission to the non-AP MLD using the link 1, the STR AP MLD and the non-AP MLD can perform the following operations (1) to (3).

(1) The STR AP MLD can perform an operation of notifying the non-AP MLD of the transmission period shortened in the link 1, using the link 2.
(2) In a case where the non-AP MLD receives signals asynchronously transmitted in a plurality of links from the AP MLD, the non-AP MLD can conduct an internal operation in which the MAC layer in the link 2 notifies the MAC layer in the link 1 of the shortened transmission period ΔT in the link 1.
(3) During the shortened transmission period ΔT, the non-AP MLD can perform transmission to the STR AP MLD at least in the link 1.

In view of the above, according to the present disclosure, in a case where the transmission period has been successfully shortened by further performing transmission using the link 2 while the STR AP MLD is performing transmission to the non-AP MLD using the link 1, delay of the transmission time of an Ack from the non-AP MLD can be prevented, and the transmission efficiency of the system can be increased.

### INDUSTRIAL APPLICABILITY

The present disclosure has been described in detail so far, with reference to specific embodiments. However, it is obvious that those skilled in the art can make modifications and substitutions of the embodiments without departing from the scope of the present disclosure.

The present disclosure can be applied to a wireless network system that performs transmission using a plurality of links in accordance with IEEE 802.11 Task Group (TG) be, for example, but of course, can also be applied to various types of wireless network systems that perform transmission using a plurality of links in accordance with other communication standards.

In short, the present disclosure has been described in an illustrative manner, and the contents described in the present specification should not be interpreted in a limited manner. To determine the scope of the present disclosure, the claims should be taken into consideration.

Note that the present disclosure can be embodied in the configurations described below.

(1) A communication device that performs wireless communication using a plurality of links, in which
   the communication device sends, during a period of transmission using a first link, a notification of information regarding a change in the period of transmission in the first link, the change being caused by further transmission using a second link.
(2) The communication device according to (1), in which
   the communication device notifies a transmission destination of the information, using the second link.
(3) The communication device according to (1) or (2), in which
   the information is written for each transmission unit forming a data frame to be transmitted in the second link.
(4) The communication device according to any one of (1) to (3), in which
   information indicating whether or not acquisition of a transmission right is being attempted in the second link is written for each transmission unit forming a data frame to be transmitted in the first link.
(5) The communication device according to any one of (1) to (4), in which
   information indicating whether or not information regarding at least a transmission period written in a frame to be transmitted in the first link has been changed, and information regarding a change in the transmission period in the first link are written for each transmission unit forming a data frame to be transmitted in the second link.
(6) The communication device according to any one of (1) to (5), in which
   other transmission using at least one of the first link or the second link is performed within an original transmission period in the first link.
(7) The communication device according to (6), in which
   the other side of communication using the plurality of links is permitted to perform transmission using at least one of the first link or the second link within the original transmission period in the first link.
(8) The communication device according to (6), in which
   a notification of opening of the second link is sent to another terminal within the original transmission period in the first link.
(9) The communication device according to (8), in which
   the notification includes information for identifying a terminal prohibited from performing transmission in the second link, and information indicating a transmission prohibition period.
(10) A communication method for performing wireless communication using a plurality of links,
   the communication method including:
   a step of starting transmission in a first link;
   a step of further starting, during a period of the transmission using the first link, transmission using a second link; and
   a step of sending a notification of information regarding a change in the period of the transmission in the first link, the change being caused by the transmission using the second link.
(11) A communication device that performs wireless communication using a plurality of links, in which,
   when further receiving data in a second link while receiving data in a first link, the communication device receives information regarding a change in a transmission period in the first link, the change being caused by transmission using the second link.
(12) The communication device according to (11), in which
   the communication device receives the information in the second link.
(13) The communication device according to (11) or (12), in which
   the communication device controls a communication operation in the first link, on the basis of the information received in the second link.
(14) The communication device according to any one of (11) to (13), in which,
   when receiving, in the first link, information indicating that the other side of communication is attempting to acquire a transmission right in the second link, the communication device performs a reception process in the second link.
(15) The communication device according to any one of (11) to (14), in which
   the communication device receives, in the second link, information indicating whether or not information regarding at least a transmission period written in a frame to be transmitted in the first link has been changed, and information regarding a change in the transmission period in the first link, and controls a communication operation in the first link.
(16) The communication device according to any one of (11) to (15), including:
   MAC layer processing units that perform processing in MAC layers in the respective links; and a common data processing unit that performs data processing common to all links,
   in which the MAC layer processing unit in the second link notifies the MAC layer processing unit in the first link of the information received in the second link through the common data processing unit.
(17) The communication device according to (16), in which
   the MAC layer processing unit in the second link receives, in the second link, information indicating whether or not information regarding at least a transmission period written in a frame to be transmitted in the first link has been changed, and the information regarding the change in the transmission period in the first link, and notifies the MAC layer processing unit in the first link of the received information through the common data processing unit.
(18) The communication device according to any one of (11) to (17), in which,
   when the communication device is able to perform only one of transmission or reception in the plurality of links, the communication device notifies the other side of communication using the plurality of links of information regarding whether or not reception of asynchronized transmission in which transmission start times are not aligned in the plurality of links is possible.
(19) The communication device according to any one of (11) to (18), in which
   the communication device notifies the other side of communication using the plurality of links of information regarding a combination of links in which simultaneous transmission and reception is not possible, but reception of asynchronized transmission is possible.
(20) A communication method for performing wireless communication using a plurality of links,
   the communication method including:
   a step of receiving data in a first link;
   a step of performing a reception process in a second link, when receiving, in the first link, information indicating that the other side of communication is attempting to acquire a transmission right in the second link;
   a step of receiving, after receiving data in the second link, information regarding a change in a transmission period in the first link, the change being caused by transmission using the second link; and
   a step of controlling a communication operation in the first link, on the basis of the information received in the second link.

### REFERENCE SIGNS LIST

- 400: Communication device
- 410: Communication unit
- 411: Communication control unit
- 412: Communication storage unit
- 413: Common data processing unit
- 414: Individual data processing unit
- 415: Signal processing unit
- 416: Wireless interface unit
- 417: Amplification unit
- 420: Control unit
- 430: Storage unit
- 440: Antenna

## Claims

1. A communication device that performs wireless communication using a plurality of links, wherein
the communication device sends, during a period of transmission using a first link, a notification of information regarding a change in the period of transmission in the first link, the change being caused by further transmission using a second link.

2. The communication device according to claim 1, wherein
the communication device notifies a transmission destination of the information, using the second link.

3. The communication device according to claim 1, wherein
the information is written for each transmission unit forming a data frame to be transmitted in the second link.

4. The communication device according to claim 1, wherein
information indicating whether or not acquisition of a transmission right is being attempted in the second link is written for each transmission unit forming a data frame to be transmitted in the first link.

5. The communication device according to claim 1, wherein
information indicating whether or not information regarding at least a transmission period written in a frame to be transmitted in the first link has been changed, and information regarding a change in the transmission period in the first link are written for each transmission unit forming a data frame to be transmitted in the second link.

6. The communication device according to claim 1, wherein
other transmission using at least one of the first link or the second link is performed within an original transmission period in the first link.

7. The communication device according to claim 6, wherein
another side of communication using the plurality of links is permitted to perform transmission using at least one of the first link or the second link within the original transmission period in the first link.

8. The communication device according to claim 6, wherein
a notification of opening of the second link is sent to another terminal within the original transmission period in the first link.

9. The communication device according to claim 8, wherein
the notification includes information for identifying a terminal prohibited from performing transmission in the second link, and information indicating a transmission prohibition period.

10. A communication method for performing wireless communication using a plurality of links,
the communication method comprising:
a step of starting transmission in a first link;
a step of further starting, during a period of the transmission using the first link, transmission using a second link; and
a step of sending a notification of information regarding a change in the period of the transmission in the first link, the change being caused by the transmission using the second link.

11. A communication device that performs wireless communication using a plurality of links, wherein,
when further receiving data in a second link while receiving data in a first link, the communication device receives information regarding a change in a transmission period in the first link, the change being caused by transmission using the second link.

12. The communication device according to claim 11, wherein
the communication device receives the information in the second link.

13. The communication device according to claim 11, wherein
the communication device controls a communication operation in the first link, on a basis of the information received in the second link.

14. The communication device according to claim 11, wherein,
when receiving, in the first link, information indicating that another side of communication is attempting to acquire a transmission right in the second link, the communication device performs a reception process in the second link.

15. The communication device according to claim 11, wherein
the communication device receives, in the second link, information indicating whether or not information regarding at least a transmission period written in a frame to be transmitted in the first link has been changed, and information regarding a change in the transmission period in the first link, and controls a communication operation in the first link.

16. The communication device according to claim 11, comprising:
MAC layer processing units that perform processing in MAC layers in the respective links; and a common data processing unit that performs data processing common to all links,
wherein the MAC layer processing unit in the second link notifies the MAC layer processing unit in the first link of the information received in the second link through the common data processing unit.

17. The communication device according to claim 16, wherein
the MAC layer processing unit in the second link receives, in the second link, information indicating whether or not information regarding at least a transmission period written in a frame to be transmitted in the first link has been changed, and the information regarding the change in the transmission period in the first link, and notifies the MAC layer processing unit in the first link of the received information through the common data processing unit.

18. The communication device according to claim 11, wherein,
when the communication device is able to perform only one of transmission or reception in the plurality of links, the communication device notifies another side of communication using the plurality of links of information regarding whether or not reception of asynchronized transmission in which transmission start times are not aligned in the plurality of links is possible.

19. The communication device according to claim 11, wherein
the communication device notifies another side of communication using the plurality of links of information regarding a combination of links in which simultaneous transmission and reception is not possible, but reception of asynchronized transmission is possible.

20. A communication method for performing wireless communication using a plurality of links,
the communication method comprising:
a step of receiving data in a first link;
a step of performing a reception process in a second link, when receiving, in the first link, information indicating that another side of communication is attempting to acquire a transmission right in the second link;
a step of receiving, after receiving data in the second link, information regarding a change in a transmission period in the first link, the change being caused by transmission using the second link; and
a step of controlling a communication operation in the first link, on a basis of the information received in the second link.
